# EUROPEAN PATENT APPLICATION

(11) **EP 4 653 260 A1**
(43) Date of publication of application: **26.11.2025**
(21) Application number: 24744680.0
(22) Date of filing: 17.01.2024
(51) Int. Cl.: B60Q 1/04, B60Q 1/14, B60Q 1/24, F21S 41/153

(54) **VEHICLE LAMP SYSTEM, CONTROL DEVICE, LIGHT DISTRIBUTION CONTROL METHOD, AND NON-TRANSITORY COMPUTER-READABLE MEDIUM**

(30) Priority: 17.01.2023 JP 2023005346; 17.01.2023 JP 2023005347; 19.01.2023 JP 2023006836; 06.02.2023 JP 2023016402
(71) Applicant: Koito Manufacturing Co., Ltd., Tokyo 141-0001 (JP)
(72) Inventor: KATAGIRI Ryogo, Shizuoka-shi, Shizuoka 424-8764 (JP); MURAMATSU Takao, Shizuoka-shi, Shizuoka 424-8764 (JP); WATANABE Shigeyuki, Shizuoka-shi, Shizuoka 424-8764 (JP)
(74) Representative: Cabinet Beau de Loménie
(86) International application number: PCT/JP2024/001160
(87) International publication number: WO 2024/154759

(57) **Abstract**

In a light distribution control method, a vehicle lamp capable of illuminating a front of a vehicle is controlled according to information on a light distribution pattern (P1) to be formed by the vehicle lamp. In the method, driving of the vehicle lamp is controlled to perform illumination to reach a distant region farther than a region (R1) where a white line is detected based on image information obtained by capturing an image of the front of the vehicle.

## Description

### TECHNICAL FIELD

The present disclosure relates to a vehicle lamp system, a control device, a light distribution control method, and a non-transitory computer-readable medium.

### BACKGROUND ART

White line detection is crucial for predictive control of a host vehicle traveling path, such as lane-keeping assistance and preceding vehicle following cruise control in advanced driver assistance systems and automated driving. As a white line detection method, means for detecting a white line on a road based on an image captured by an imaging unit is generally used.

For example, an obstacle detection device has been devised which includes an imaging unit installed in a vehicle; a white line detection unit that detects a white line on a road based on an image captured by the imaging unit and obtains a first distance from the vehicle to a point where the white line cannot be detected; an obstacle detection unit that detects presence or absence of an obstacle based on the image captured by the imaging unit and obtains a second distance from the vehicle to the obstacle; and an obstacle determination unit that compares the first distance and the second distance and determines the presence or absence of the obstacle based on a comparison result and a detection result of the obstacle (see Patent Literature 1).

Further, visibility of a road surface in front of the vehicle decreases due to various factors under bad weather such as rainfall, snowfall, or fog generation. For example, during rainfall, most of illumination light from the host vehicle is specularly reflected by a water film on the road surface, and thus light that is diffusely reflected or retroreflected by the road surface and returns to the host vehicle is reduced. Therefore, it is difficult to see the road surface. On the other hand, illumination light from an oncoming vehicle is reflected by the water film, and such reflected light can cause glare. Further, the road surface visibility may also be affected by reflection of various structures on the water film, such as light-emitting objects such as street lights and reflection objects such as signs around the road surface.

Therefore, a vehicle lamp system has been devised which includes a pair of lamp units capable of forming, as a high beam light distribution pattern in bad weather, a first light distribution pattern formed in normal weather and a second light distribution pattern formed in bad weather; and a control unit that controls the pair of lamp units such that the second light distribution pattern is formed based on a weather state around a vehicle (see Patent Literature 2).

Further, visibility of a road surface in front of the vehicle decreases due to various factors under bad weather such as rainfall, snowfall, or fog generation. For example, during rainfall, most of illumination light from the host vehicle is specularly reflected by a water film on the road surface, and thus light that is diffusely reflected or retroreflected by the road surface and returns to the host vehicle is reduced. Therefore, it is difficult to see an entire road surface and to recognize a lane width.

In order to improve recognition of the lane width, it is effective to visually recognize lane marks along left and right road shoulders. Therefore, a vehicle lamp system has been devised which includes a first optical system capable of forming a diffusion light distribution pattern spreading in a horizontal direction in front of a vehicle; and a second optical system capable of forming a light distribution pattern during rainfall in which only a host-lane-side lane mark extending along a road shoulder on a host lane side and a periphery thereof are illuminated with light.

Further, visibility of a white line on a road is important for a driver to grasp a road shape in front of the host vehicle during traveling at night. However, when snow accumulates, an entire road is covered with snow, and thus the white line cannot be recognized. Therefore, by performing steering to follow ruts formed as a trajectory of a preceding vehicle traveling in front of the host vehicle, safe driving along the road shape is possible.

For example, a lamp control device has been devised which includes a light distribution control unit that illuminates ruts detected in a region in front of a host vehicle more brightly than a periphery when at least a snow accumulation situation is detected as a road situation on which the vehicle travels (see Patent Literature 4).

### CITATION LIST

### PATENT LITERATURE

Patent Literature 1: JP2004-220281A
Patent Literature 2: JP2018-034758A
Patent Literature 3: JP6374145B2
Patent Literature 4: JP2012-051488A

### SUMMARY OF INVENTION

### TECHNICAL PROBLEM

The obstacle detection device described above calculates a white line detectable distance at which the white line cannot be detected, and at a position farther than the distance, suspends the determination as to the presence or absence of the obstacle on an assumption that reliability of the control using the white line is low. Therefore, if the white line in front of the vehicle can be detected accurately at a position farther than the distance, a scope of application of various predictive control methods will expand. In particular, at night, an illumination distance of a headlamp is limited, and the white line detectable distance tends to be short.

A first object of the present disclosure is to provide a new technique for increasing a detection distance of a white line.

Further, in the second light distribution pattern that can be formed in bad weather by the lamp unit provided in the vehicle lamp system described above, mainly by blocking or reducing the light mainly in a central region in front of the vehicle, light curtain glare can be reduced.

However, although the second light distribution pattern described above can reduce the light curtain glare, visibility of a distant region, a sign, or the like in the central region in front of the vehicle is also reduced by blocking or reducing the light in the central region in front of the vehicle. On the other hand, when illumination with the first light distribution pattern formed in normal weather is performed in order to improve visibility of an entire front of the vehicle, reflected light from the reflection objects such as the signs may give glare to the driver. In particular, in bad weather, the reflection objects may be reflected on the road surface, which may cause further reduction in the visibility.

A second object of the present disclosure is to provide a new technique for improving visibility around a vehicle in a case of bad weather.

Further, the second optical system of the vehicle lamp system described above can improve the visibility around the host-lane-side lane mark, but visibility of a road shoulder of an oncoming lane does not particularly change, and thus there is room for further improvement in recognition of the lane width. In addition, the second optical system is provided in a second lamp that forms a fog lamp light distribution pattern separately from a first lamp that forms a low beam light distribution pattern and a high beam light distribution pattern. Thus, a size of an entire headlight increases.

A third object of the present disclosure is to provide a new technique for improving visibility around a vehicle in a case of bad weather.

The lamp control device described above can illuminate the ruts more brightly than the periphery, but there is room for improvement in accurately grasping a shape of the ruts from the front of the vehicle having only white shading.

A fourth object of the present disclosure is to provide a new technique for improving rut recognition when snow accumulates.

### SOLUTION TO PROBLEM

A vehicle lamp system according to an aspect of the present disclosure includes a vehicle lamp configured to illuminate a front of a vehicle; and a control unit configured to control driving of the vehicle lamp according to information on a light distribution pattern to be formed by the vehicle lamp. The control unit is configured to control the driving of the vehicle lamp to perform illumination to reach a distant region farther than a region where a white line is detected based on image information obtained by capturing an image of the front of the vehicle.

According to the above aspect, by performing illumination to reach the distant region where the white line has not been detected with the lamp, a detection distance of the white line can be extended.

A vehicle lamp system that is an aspect of the present disclosure includes a vehicle lamp configured to illuminate a front of a vehicle; and a control unit configured to control driving of the vehicle lamp according to information on a light distribution pattern to be formed by the vehicle lamp. The control unit is configured to control the vehicle lamp to form a light distribution pattern in which a road shoulder region on an outer side of white lines detected based on image information obtained by capturing an image of the front of the vehicle is brighter than a traveling region between the white lines.

According to the above aspect, a three-dimensional object in the road shoulder region on an outer side of the white lines can be easily recognized.

An aspect of the present disclosure is a control device. The device is a control device for controlling a vehicle lamp capable of illuminating a front of a vehicle, and the device includes a control unit configured to control driving of the vehicle lamp according to information on a light distribution pattern to be formed by the vehicle lamp. The control unit is configured to control driving of the vehicle lamp to perform illumination to reach a distant region farther than a region where a white line is detected based on image information obtained by capturing an image of the front of the vehicle.

According to the above aspect, by controlling the driving of the vehicle lamp to reach the distant region where the white line has not been detected, the detection distance of the white line can be extended.

An aspect of the present disclosure is a light distribution control method. The method is a light distribution control method for controlling a vehicle lamp, capable of illuminating a front of a vehicle, according to information on a light distribution pattern to be formed by the vehicle lamp, and the method includes controlling driving of the vehicle lamp to perform illumination to reach a distant region farther than a region where a white line is detected based on image information obtained by capturing an image of the front of the vehicle.

According to the above aspect, by controlling the driving of the vehicle lamp to reach the distant region where the white line has not been detected, the detection distance of the white line can be extended.

An aspect of the present disclosure is a non-transitory computer-readable medium storing a program. The non-transitory computer-readable medium stores a program causing a control unit to control a vehicle lamp, capable of illuminating a front of a vehicle, according to information on a light distribution pattern to be formed by the vehicle lamp. The non-transitory computer-readable medium causes the control unit to perform a step of controlling driving of the vehicle lamp to perform illumination to reach a distant region farther than a region where a white line is detected based on image information obtained by capturing an image of the front of the vehicle.

According to the above aspect, by controlling the driving of the vehicle lamp to reach the distant region where the white line has not been detected, the detection distance of the white line can be extended.

A vehicle lamp system according to an aspect of the present disclosure includes a vehicle lamp configured to illuminate a front of a vehicle; and a control unit configured to control the vehicle lamp to illuminate the front of the vehicle with a light distribution pattern determined based on weather information correlated with a weather state around the vehicle and reflection object information on a reflection object present in front of the vehicle. In a case in which it is normal weather and no reflection object is present in front of the vehicle, the control unit is configured to control the vehicle lamp to perform illumination with a first light distribution pattern, in a case in which it is normal weather and a reflection object is present in front of the vehicle, the control unit is configured to control the vehicle lamp to perform illumination with a second light distribution pattern in which a partial region where the reflection object is present is darker than a corresponding partial region in the first light distribution pattern, and in a case in which it is rainy weather and a reflection object is present in front of the vehicle, the control unit is configured to control the vehicle lamp to perform illumination with a third light distribution pattern in which a partial region where the reflection object is present is darker than a corresponding partial region in the second light distribution pattern.

According to the above aspect, when it is rainy weather and a reflection object is present in front of the vehicle, the vehicle lamp illuminates the front of the vehicle with the third light distribution pattern in which the partial region where the reflection object is present is darker than the corresponding partial region in the second light distribution pattern, and thus reflection of the reflection object on a road surface is reduced. Hence, visibility around the vehicle in bad weather is improved.

A vehicle lamp system according to an aspect of the present disclosure includes a vehicle lamp configured to illuminate a front of a vehicle; and a control unit configured to control the vehicle lamp to illuminate the front of the vehicle with a light distribution pattern determined based on reflection object information on a reflection object present in front of the vehicle and presence or absence of reflection of reflected light, that is reflected by the reflection object, on a road surface. In a case in which no reflection object is present in front of the vehicle, the control unit is configured to control the vehicle lamp to perform illumination with a first light distribution pattern, in a case in which a reflection object is present in front of the vehicle and the reflection is not present, the control unit is configured to control the vehicle lamp to perform illumination with a second light distribution pattern in which a partial region where the reflection object is present is darker than a corresponding partial region in the first light distribution pattern, and in a case in which a reflection object is present in front of the vehicle and the reflection is present, the control unit is configured to control the vehicle lamp to perform illumination with a third light distribution pattern in which a partial region where the reflection object is present is darker than a corresponding partial region in the second light distribution pattern.

According to the above aspect, when a reflection object is present in front of the vehicle and the reflection is present, the vehicle lamp illuminates the front of the vehicle with the third light distribution pattern in which the partial region where the reflection object is present is darker than the corresponding partial region in the second light distribution pattern, and thus the reflection of the reflection object on the road surface is reduced. Hence, the visibility around the vehicle in bad weather is improved.

An aspect of the present disclosure is a control device. The device is a control device for controlling a vehicle lamp capable of illuminating a front of a vehicle, and the device includes a control unit configured to control the vehicle lamp to illuminate the front of the vehicle with a light distribution pattern determined based on weather information correlated with a weather state around the vehicle and reflection object information on a reflection object present in front of the vehicle. In a case in which it is normal weather and no reflection object is present in front of the vehicle, the control unit is configured to control the vehicle lamp to perform illumination with a first light distribution pattern, in a case in which it is normal weather and a reflection object is present in front of the vehicle, the control unit is configured to control the vehicle lamp to perform illumination with a second light distribution pattern in which a partial region where the reflection object is present is darker than a corresponding partial region in the first light distribution pattern, and in a case in which it is rainy weather and a reflection object is present in front of the vehicle, the control unit is configured to control the vehicle lamp to perform illumination with a third light distribution pattern in which a partial region where the reflection object is present is darker than a corresponding partial region in the second light distribution pattern.

According to the above aspect, when it is rainy weather and a reflection object is present in front of the vehicle, the control device controls the vehicle lamp to illuminate the front of the vehicle with the third light distribution pattern in which the partial region in which the reflection object is present is darker than the corresponding partial region in the second light distribution pattern, and thus the reflection of the reflection object on the road surface is reduced. Hence, the visibility around the vehicle in bad weather is improved.

An aspect of the present disclosure is a light distribution control method. The method is a light distribution control method for controlling a vehicle lamp to illuminate a front of a vehicle with a light distribution pattern determined based on weather information correlated with a weather state around the vehicle and reflection object information on a reflection object present in front of the vehicle, and the method includes: controlling, in a case in which it is normal weather and no reflection object is present in front of the vehicle, the vehicle lamp to perform illumination with a first light distribution pattern; controlling, in a case in which it is normal weather and a reflection object is present in front of the vehicle, the vehicle lamp to perform illumination with a second light distribution pattern in which a partial region where the reflection object is present is darker than a corresponding partial region in the first light distribution pattern; and controlling, in a case in which it is rainy weather and a reflection object is present in front of the vehicle, the vehicle lamp to perform illumination with a third light distribution pattern in which a partial region where the reflection object is present is darker than a corresponding partial region in the second light distribution pattern.

According to the above aspect, when it is rainy weather and a reflection object is present in front of the vehicle, the vehicle lamp is controlled to illuminate the front of the vehicle with the third light distribution pattern in which the partial region in which the reflection object is present is darker than the corresponding partial region in the second light distribution pattern, and thus the reflection of the reflection object on the road surface is reduced. Hence, the visibility around the vehicle in bad weather is improved.

An aspect of the present disclosure is a non-transitory computer-readable medium storing a program. The non-transitory computer-readable medium is a non-transitory computer-readable medium for a vehicle lamp configured to illuminate a front of a vehicle, and a control unit configured to control the vehicle lamp to illuminate the front of the vehicle with a light distribution pattern determined based on weather information correlated with a weather state around the vehicle and reflection object information on a reflection object present in front of the vehicle. The non-transitory computer-readable medium causes the control unit to perform a step of controlling, in a case in which it is normal weather and no reflection object is present in front of the vehicle, the vehicle lamp to perform illumination with a first light distribution pattern; a step of controlling, in a case in which it is normal weather and a reflection object is present in front of the vehicle, the vehicle lamp to perform illumination with a second light distribution pattern in which a partial region where the reflection object is present is darker than a corresponding partial region in the first light distribution pattern, and a step of controlling, in a case in which it is rainy weather and a reflection object is present in front of the vehicle, the vehicle lamp to perform illumination with a third light distribution pattern in which a partial region where the reflection object is present is darker than a corresponding partial region in the second light distribution pattern.

According to the above aspect, by causing the control unit to, when it is rainy weather and a reflection object is present in front of the vehicle, control the vehicle lamp to illuminate the front of the vehicle with the third light distribution pattern in which the partial region in which the reflection object is present is darker than the corresponding partial region in the second light distribution pattern, the reflection of the reflection object on the road surface is reduced. Hence, the visibility around the vehicle in bad weather is improved.

A vehicle lamp system according to an aspect of the present disclosure includes a vehicle lamp including a light source, in which a plurality of light emitting regions are arranged in a matrix shape, and configured to illuminate a front of a vehicle with light emitted from the light source; and a control unit configured to control the vehicle lamp to perform illumination with a selected light distribution pattern by controlling an amount of light emitted from each of the plurality of light emitting regions. The control unit is configured to control the vehicle lamp to illuminate, in rainy weather, the front of the vehicle with a determination light distribution pattern for determining a road shoulder.

According to the above aspect, the vehicle lamp illuminates the front of the vehicle with the determination light distribution pattern for determining the road shoulder in rainy weather, and thus the road shoulder is easily determined.

An aspect of the present disclosure is a control device. The device is a control device configured to control a vehicle lamp including a light source, in which a plurality of light emitting regions are arranged in a matrix shape, and capable of illuminating a front of a vehicle with light emitted from the light source, and the device includes a control unit configured to control the vehicle lamp to perform illumination with a selected light distribution pattern by controlling an amount of light emitted from each of the plurality of light emitting regions. The control unit is configured to control the vehicle lamp to illuminate, in rainy weather, the front of the vehicle with a determination light distribution pattern for determining a road shoulder.

According to the above aspect, the vehicle lamp illuminates the front of the vehicle with the determination light distribution pattern for determining the road shoulder in rainy weather, and thus the road shoulder is easily determined.

An aspect of the present disclosure is a light distribution control method. The method is a light distribution control method for controlling a vehicle lamp including a light source, in which a plurality of light emitting regions are arranged in a matrix shape, and capable of illuminating a front of a vehicle with light emitted from the light source, the method includes controlling the vehicle lamp to perform illumination with a selected light distribution pattern by controlling an amount of light emitted from each of the plurality of light emitting regions, and the vehicle lamp is controlled to illuminate, in rainy weather, the front of the vehicle with a determination light distribution pattern for determining a road shoulder.

According to the above aspect, the vehicle lamp illuminates the front of the vehicle with the determination light distribution pattern for determining the road shoulder in rainy weather, and thus the road shoulder is easily determined.

An aspect of the present disclosure is a non-transitory computer-readable medium storing a program. The non-transitory computer-readable medium stores a program causing a control unit to control a vehicle lamp including a light source, in which a plurality of light emitting regions are arranged in a matrix shape, and configured to illuminate a front of a vehicle with light emitted from the light source. The non-transitory computer-readable medium causes the control unit to perform: a step of controlling the vehicle lamp to perform illumination with a selected light distribution pattern by controlling an amount of light emitted from each of the plurality of light emitting regions; and a step of controlling the vehicle lamp to illuminate, in rainy weather, the front of the vehicle with a determination light distribution pattern for determining a road shoulder is performed.

According to the above aspect, the vehicle lamp illuminates the front of the vehicle with the determination light distribution pattern for determining the road shoulder in rainy weather, and thus the road shoulder is easily determined.

A vehicle lamp system according to an aspect of the present disclosure includes a vehicle lamp configured to illuminate a front of a vehicle; and a control unit configured to control driving of the vehicle lamp according to information on a light distribution pattern to be formed by the vehicle lamp. The vehicle lamp includes a first lamp unit configured to form a low beam light distribution pattern, and a second lamp unit configured to form, on a road surface, a road surface drawing light distribution pattern whose shape changes depending on presence or absence of a rut. The control unit is configured to control the driving of the vehicle lamp to form the low beam light distribution pattern and the road surface drawing light distribution pattern in a case in which a snow accumulation situation in front of the vehicle is detected.

According to the above aspect, the vehicle lamp forms the road surface drawing light distribution pattern whose shape changes depending on the presence or absence of the rut on the road surface when snow accumulates, and thus the rut is easily recognized.

A vehicle lamp system according to an aspect of the present disclosure includes a vehicle lamp configured to illuminate a front of a vehicle; and a control unit configured to control driving of the vehicle lamp according to information on a light distribution pattern to be formed by the vehicle lamp. The vehicle lamp includes a lamp unit configured to form, on a road surface, a road surface drawing light distribution pattern whose shape changes depending on presence or absence of a rut. The control unit is configured to control, in a case in which a snow accumulation situation in front of the vehicle is detected, the driving of the vehicle lamp to form the road surface drawing light distribution pattern and perform follow-up illumination with the road surface drawing light distribution pattern in a region including the rut.

According to the above aspect, the vehicle lamp forms the road surface drawing light distribution pattern whose shape changes depending on the presence or absence of the rut on the road surface when snow accumulates, and thus the rut is easily recognized. In addition, the driver can easily recognize the direction in which the host vehicle should travel by performing follow-up illumination in the region including the detected rut with the road surface drawing light distribution pattern.

An aspect of the present disclosure is a control device. The device is configured to control a vehicle lamp configured to illuminate a front of a vehicle and including a first lamp unit configured to form a low beam light distribution pattern, and a second lamp unit configured to form, on a road surface, a road surface drawing light distribution pattern whose shape changes depending on presence or absence of a rut. The control device includes a control unit configured to control the vehicle lamp according to information on a light distribution pattern to be formed by the vehicle lamp. The control unit is configured to control, in a case in which a snow accumulation situation in front of the vehicle is detected, driving of the vehicle lamp to form the low beam light distribution pattern and the road surface drawing light distribution pattern.

According to the above aspect, the vehicle lamp forms the road surface drawing light distribution pattern whose shape changes depending on the presence or absence of the rut on the road surface when snow accumulates, and thus the rut is easily recognized.

An aspect of the present disclosure is a light distribution control method. The method is a light distribution control method for controlling a vehicle lamp according to information on a light distribution pattern to be formed by the vehicle lamp, the vehicle lamp being capable of illuminating a front of a vehicle and including a first lamp unit configured to form a low beam light distribution pattern, and a second lamp unit configured to form, on a road surface, a road surface drawing light distribution pattern whose shape changes depending on presence or absence of a rut, and the method includes controlling, in a case in which a snow accumulation situation in front of the vehicle is detected, driving of the vehicle lamp to form the low beam light distribution pattern and the road surface drawing light distribution pattern.

According to the above aspect, the vehicle lamp forms the road surface drawing light distribution pattern whose shape changes depending on the presence or absence of the rut on the road surface when snow accumulates, and thus the rut is easily recognized.

An aspect of the present disclosure is a non-transitory computer-readable medium storing a program. The non-transitory computer-readable medium stores a program causing a control unit to control a vehicle lamp according to information on a light distribution pattern to be formed by the vehicle lamp, the vehicle lamp being capable of illuminating a front of a vehicle and including a first lamp unit configured to form a low beam light distribution pattern, and a second lamp unit configured to form, on a road surface, a road surface drawing light distribution pattern whose shape changes depending on presence or absence of a rut. The non-transitory computer-readable medium causes the control unit to perform, in a case in which a snow accumulation situation in front of the vehicle is detected, a step of controlling driving of the vehicle lamp to form the low beam light distribution pattern and the road surface drawing light distribution pattern.

According to the above aspect, the vehicle lamp forms the road surface drawing light distribution pattern whose shape changes depending on the presence or absence of the rut on the road surface when snow accumulates, and thus the rut is easily recognized.

Any combination of the above components, and conversions of expressions of the present disclosure between methods such as manufacturing methods and control methods, devices such as lamps, illumination, and control devices, light-emitting modules, light sources, non-transitory computer-readable media on which programs are recorded, and computer-readable recording media, are also valid aspects of the present disclosure.

### ADVANTAGEOUS EFFECTS OF INVENTION

According to the present disclosure, a detection distance of the white line can be expanded.

According to the present disclosure, a new lamp that improves visibility around a vehicle in bad weather can be provided. According to the present disclosure, the visibility around a vehicle in bad weather can be improved. According to the present disclosure, rut recognition when snow accumulates can be improved.

### BRIEF DESCRIPTION OF DRAWINGS

[Fig. 1] Fig. 1 is a block diagram showing a vehicle lamp system according to a first embodiment.
[Fig. 2] Fig. 2 is a diagram schematically showing an example of a first light distribution pattern formed by the vehicle lamp system.
[Fig. 3] Fig. 3 is a diagram showing an example of a captured image in a front of a vehicle traveling at night.
[Fig. 4A] Fig. 4A is a schematic diagram illustrating white line detection in an illumination range.
[Fig. 4B] Fig. 4B is a schematic diagram illustrating the white line detection in the illumination range.
[Fig. 4C] Fig. 4C is a schematic diagram illustrating the white line detection in the illumination range.
[Fig. 5] Fig. 5 is a flowchart showing a light distribution control method according to the first embodiment.
[Fig. 6] Fig. 6 is a top view illustrating the illumination range in which white line regions are illuminated.
[Fig. 7] Fig. 7 is a side view illustrating the illumination range in which the white line regions are illuminated.
[Fig. 8] Fig. 8 is a diagram showing a light distribution pattern in which the white line region is brighter than a periphery thereof.
[Fig. 9] Fig. 9 is a diagram showing another example of the captured image of the front of the vehicle traveling at night.
[Fig. 10] Fig. 10 is a flowchart showing a light distribution control method according to a modification of the first embodiment.
[Fig. 11A] Fig. 11A is a diagram showing an example of a light distribution pattern in which brightness at a boundary of each area changes steeply.
[Fig. 11B] Fig. 11B is a diagram showing an image obtained by performing image analysis (edge enhancement or binarization) on the light distribution pattern shown in Fig. 11A.
[Fig. 11C] Fig. 11C is a diagram showing an example of a light distribution pattern in which the brightness at the boundary of each area changes gently (the brightness changes gradually).
[Fig. 11D] Fig. 11D is a diagram showing an example of an image obtained by performing image analysis (edge enhancement or binarization) on the light distribution pattern shown in Fig. 11C.
[Fig. 12] Fig. 12 is a block diagram showing a vehicle lamp system according to a second embodiment.
[Fig. 13] Fig. 13 is a diagram schematically showing an example of a second light distribution pattern formed in normal weather.
[Fig. 14] Fig. 14 is a schematic diagram illustrating a state in which light illuminating reflection objects are reflected on a road surface.
[Fig. 15] Fig. 15 is a flowchart illustrating a light distribution control method according to the second embodiment.
[Fig. 16] Fig. 16 is a flowchart illustrating a light distribution control method according to a modification.
[Fig. 17] Fig. 17 is a block diagram showing a vehicle lamp system according to a third embodiment.
[Fig. 18] Fig. 18 is a flowchart showing an example of a light distribution control method according to the third embodiment.
[Fig. 19] Fig. 19 is a schematic diagram illustrating a road shoulder light distribution pattern for improving recognition of a lane width.
[Fig. 20] Fig. 20 is a block diagram showing a vehicle lamp system according to a fourth embodiment.
[Fig. 21] Fig. 21 is a flowchart showing an example of a light distribution control method according to the fourth embodiment.
[Fig. 22] Fig. 22 is a schematic diagram illustrating a road surface drawing light distribution pattern for improving rut recognition.

### DESCRIPTION OF EMBODIMENTS

Hereinafter, the present disclosure will be described based on a preferred embodiment with reference to the drawings. The same or equivalent components, members, and processes shown in the drawings are denoted by the same reference numerals, and redundant descriptions thereof will be omitted as appropriate. The embodiment is illustrative rather than limiting the invention, and not all features and combinations thereof described in the embodiment are necessarily essential to the invention.

### (First Embodiment)

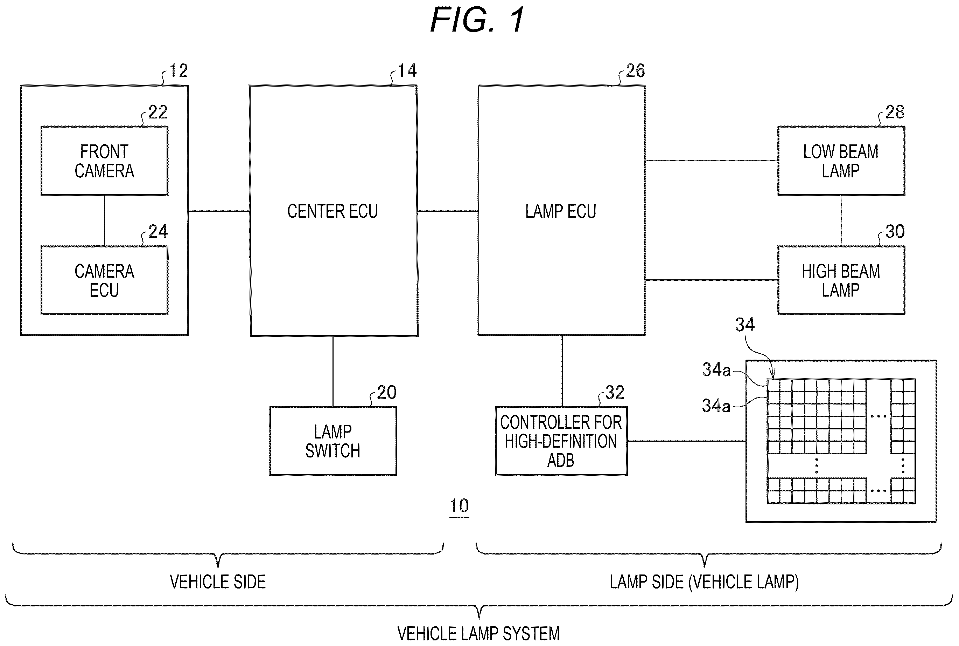

A vehicle lamp according to the present disclosure is a vehicle headlight disposed in a front of a vehicle, and constitutes a vehicle lamp system when appropriately combined with various control units, sensors, and the like. First, a schematic configuration of a vehicle lamp system according to a first embodiment will be described. Fig. 1 is a block diagram of the vehicle lamp system according to the present embodiment.

A vehicle lamp system 10 includes a camera unit 12 compatible with advanced driver-assistance systems (ADAS), a center ECU 14, and a lamp switch 20. The camera unit 12 includes a front camera 22 that captures an image of the front of the vehicle and a camera ECU 24 that detects an object such as a sign or a vehicle present in front of the vehicle based on image information captured by the front camera 22. The camera unit 12 and the center ECU 14 according to the present embodiment are provided on a vehicle main body side, but may be provided anywhere in the entire vehicle.

Further, the vehicle lamp system 10 includes a lamp ECU 26, a low beam lamp 28 and a high beam lamp 30 that are subjected to light distribution control by the lamp ECU 26, a controller 32 for high-definition adaptive driving beam (ADB), and an LED unit 34 for high-definition ADB controlled by the controller 32. The lamp ECU 26 and the controller 32 according to the present embodiment are provided in any of the low beam lamp 28, the high beam lamp 30, and the LED unit 34, which are vehicle lamps.

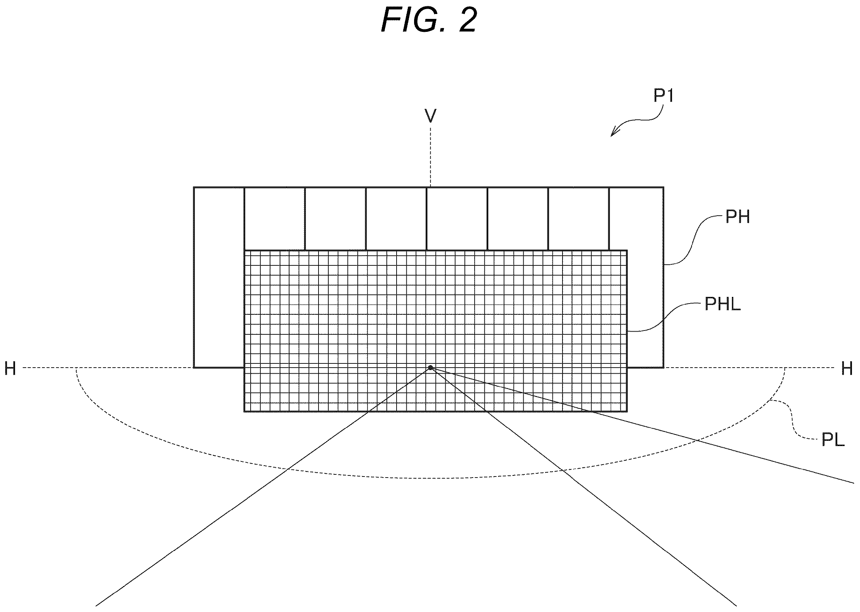

Fig. 2 is a diagram schematically showing an example of a first light distribution pattern formed by the vehicle lamp system. A first light distribution pattern P1 shown in Fig. 2 is a pattern in which a low beam light distribution pattern PL formed by the low beam lamp 28, a high beam light distribution pattern PH formed by the high beam lamp 30, and an ADB light distribution pattern PHL formed by the LED unit 34 overlap.

For the low beam lamp 28, a light source and an optical member are appropriately selected to illuminate a vehicle vicinity region below an H-H line. For the high beam lamp 30, a light source and an optical member are appropriately selected to illuminate a distant region above the H-H line. In the high beam lamp 30, eight LEDs are aligned in one direction, and a light distribution pattern in which a part of the high beam light distribution pattern PH is blocked or dimmed can be formed by controlling turning on and off of each LED.

For the LED unit 34, a light source and an optical member are appropriately selected to illuminate a region centered on an intersection of the H-H line and a V line, and the LED unit 34 is a vehicle lamp capable of illuminating a front of the vehicle with light emitted from the LED unit 34. The ADB light distribution pattern PHL is a light distribution pattern that overlaps both the low beam light distribution pattern PL and the high beam light distribution pattern PH with the intersection of the H-H line and the V line as a center. Further, by individually controlling a driving current of each LED and setting the driving currents of a part of the LED to zero or reducing the currents, a part of pixels of a matrix constituting the ADB light distribution pattern PHL can be set into a blocked or dimmed state. Accordingly, it is possible to minimize a light blocking region when glare to a vehicle or a person in a range of the ADB light distribution pattern PHL is prevented and to maintain visibility in other regions.

The LED unit 34 has a light source in which 64 in a vertical direction × 256 in a horizontal direction LEDs 34a (light emitting regions) are arranged in a matrix shape, and driving of each LED is individually controlled based on an instruction from the controller 32. In the LED unit 34, 20 or more light emitting elements may be arranged in a short side direction of the rectangle, and 100 or more light emitting elements may be arranged in a long side direction. In addition to the LED, an organic EL element, a liquid crystal shutter, a MEMS mirror, or the like can also be applied as the light source as long as the matrix-shaped light emitting regions can be individually turned on and off.

The controller 32 is configured to form a plurality of light distribution patterns, in which the brightness of the partial region is different, by changing an illumination state of a part of light emitting regions among the plurality of light emitting regions. In other words, the controller 32 controls the vehicle lamp to perform illumination with a selected light distribution pattern by controlling an amount of light emitted from each of the plurality of light emitting regions. Accordingly, various light distribution patterns can be formed by one LED unit 34. Further, even if there are a plurality of partial regions in each of which a reflection object is present, light distribution patterns obtained by adjusting the brightness of each partial region can be formed.

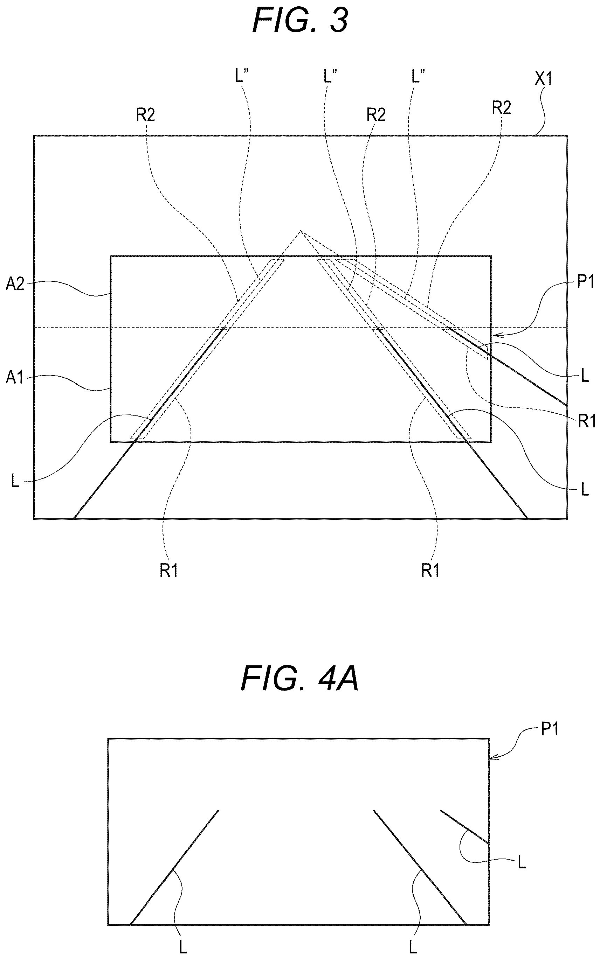

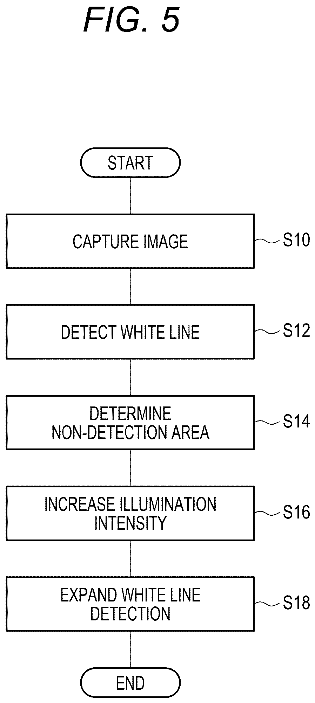

Next, visibility of a white line (including an orange line) such as a center line or a division line displayed on a road surface in front of the vehicle will be described. Fig. 3 is a diagram showing an example of a captured image of the front of the vehicle traveling at night. Figs. 4A to 4C are schematic diagrams illustrating white line detection in an illumination range. Fig. 5 is a flowchart showing a light distribution control method according to the present embodiment. Fig. 3 and Figs. 4A to 4C each show a part of the first light distribution pattern P1 with a range in which the white lines are illuminated as a center.

At night, a host vehicle travels while illuminating the front of the vehicle with the first light distribution pattern P1 shown in Fig. 2 by each lamp provided in the vehicle lamp system 10. Among regions illuminated with the first light distribution pattern P1, an amount of light reaching a distant region is relatively small, and thus it may be difficult to identify a distant white line.

In the light distribution control method according to the present embodiment, when the process is started at a predetermined timing (for example, the lamp switch 20 is turned on), the camera unit 12 captures an image of the front of the vehicle to acquire a captured image (S10). In this case, as shown in Fig. 4A, white lines on a vehicle vicinity side (a lower side in a captured image X1) in the regions illuminated with the first light distribution pattern P1 are detected (S12), but for white lines on a far side (an upper side in the captured image X1), the white lines are not detected due to insufficient amount of light.

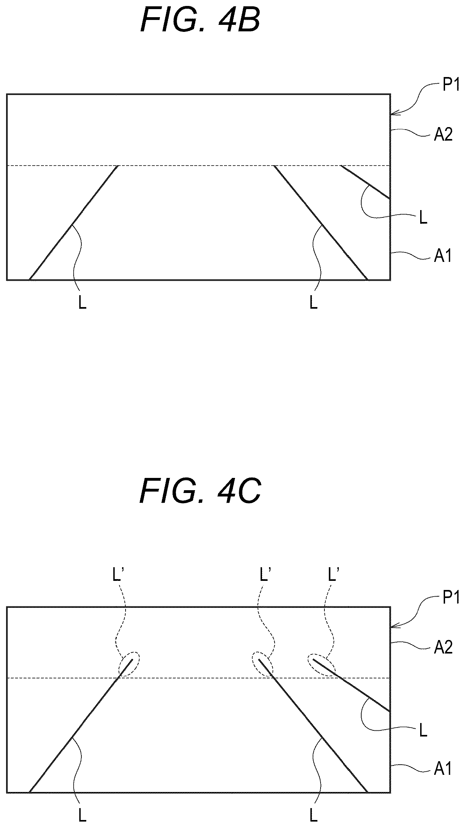

Therefore, as shown in Fig. 4B, a white line detection area A1 and a white line non-detection area A2 are determined by the camera unit 12 and the center ECU 14 (S14). Then, the control unit controls driving of the vehicle lamp such that the white line non-detection area A2 which is a distant region farther than the white line detection area A1 is illuminated. When the white line non-detection area A2 is already illuminated with the first light distribution pattern P1, an illumination intensity is increased by further increasing the driving current of the light source of each lamp that illuminates the white line non-detection area A2 (S16).

Accordingly, as shown in Fig. 4C, a part L' of each of the white lines that are present in the white line non-detection area A2 but have not been identified can be detected (S18). That is, by performing illumination to reach a distant region where the white lines L have not been detected with the lamp, a detection distance of the white line can be extended. In other words, by increasing the illumination intensity of the lamp such that a sufficient amount of light reaches the distant region where the white line L has not been detected, the detection distance of the white line can be extended. Alternatively, the control unit controls the driving of the vehicle lamp such that an amount of light or an illumination range necessary for recognizing an unrecognized white line in a distant region farther than a region where the white line is detected can be obtained.

Further, as shown in Fig. 3, the control unit according to the present embodiment controls the LED unit 34 to form a light distribution pattern in which a white line region R1 corresponding to a shape of each of the detected white lines L is brighter than a periphery of the white line region. In the LED unit 34, a plurality of LEDs 34a are arranged in a matrix shape, and the control unit is configured to form a plurality of light distribution patterns by changing the illumination state of a part of LEDs 34a among the plurality of LEDs 34a. Accordingly, the white line region R1 along the shape of the white line L can be selectively brightened more than the periphery, and accuracy of subsequent white line detection is improved.

Next, a case where the white lines in the white line non-detection area are estimated from the detected white lines will be described. As shown in Fig. 3, the control unit estimates estimated white lines L" in the white line non-detection area A2 based on the respective white lines L detected in the white line detection area A1. Then, the control unit controls the LED unit 34 to form a light distribution pattern in which a white line region R2 corresponding to a shape of a corresponding one of the estimated white lines L" is brighter than a periphery of the white line region. Accordingly, accuracy of subsequent detection of the estimated white line L" is improved.

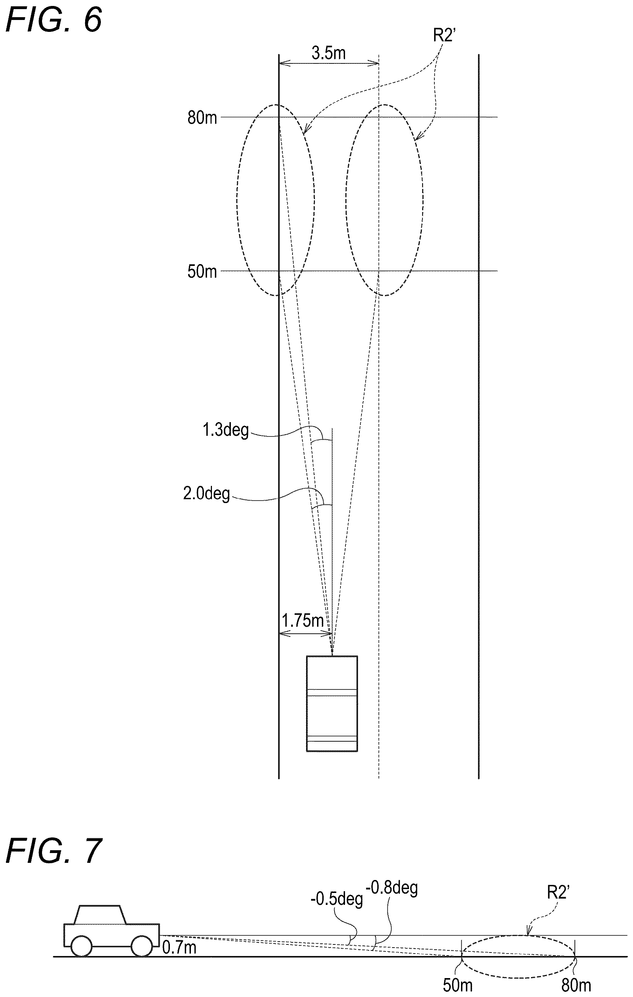

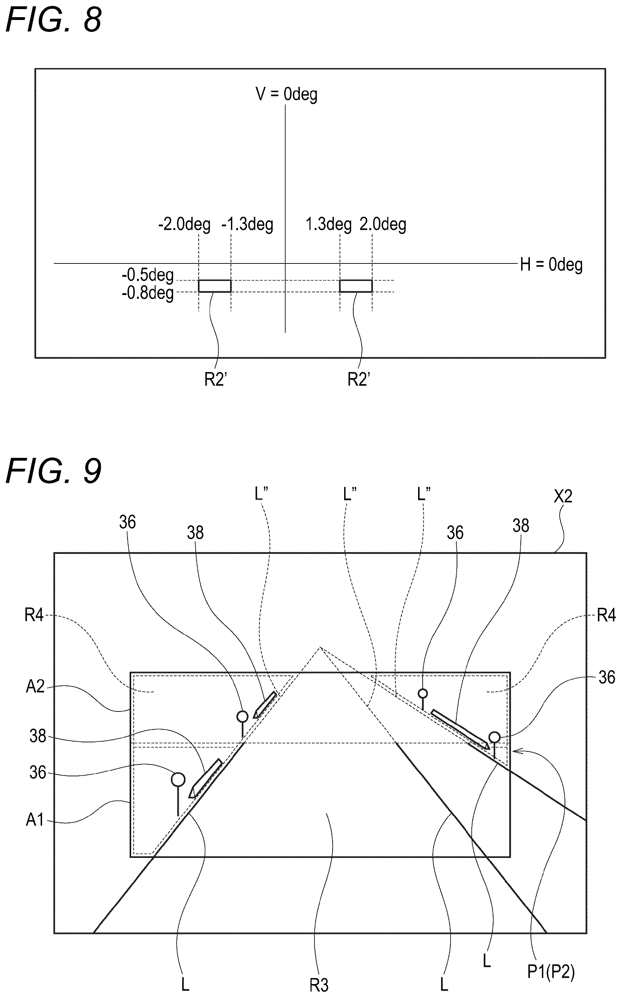

Next, the light distribution pattern for illuminating the white line region R2 corresponding to the shape of the estimated white line L" will be described. Fig. 6 is a top view illustrating an illumination range in which the white line regions R2 are illuminated. Fig. 7 is a side view illustrating the illumination range in which the white line regions R2 are illuminated. Fig. 8 is a diagram showing a light distribution pattern in which each of the white line regions R2 is brighter than a periphery thereof.

Each of the white line regions R2 shown in Figs. 6 and 7 is a range of about 50 m to 80 m in front of the vehicle. Further, the control unit controls the LED unit 34 to form a light distribution pattern in which illumination regions R2' including ranges of 1.3° to 2.0° on both sides of a V-V line and 0.5° to 0.8° below the H-H line on a screen in front of the vehicle are illuminated as ranges corresponding to the respective white line regions R2. Accordingly, the accuracy of the white line detection is improved. The light distribution pattern according to the present embodiment may be a light distribution pattern in which the illumination region R2' is brighter than the periphery thereof, or the periphery of the illumination region R2' may not be illuminated.

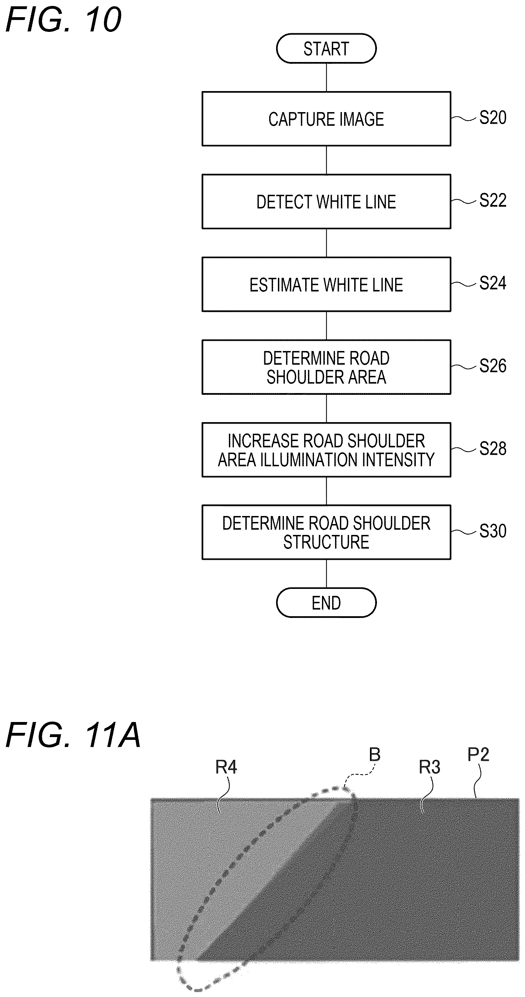

Next, a method of determining a traveling region and a road shoulder region on an outer side of the traveling region will be described. Fig. 9 is a diagram showing another example of the captured image of the front of the vehicle traveling at night. Fig. 10 is a flowchart showing a light distribution control method according to a modification of the present embodiment.

In the light distribution control method according to the modification, when the process is started at a predetermined timing, the camera unit 12 captures an image of the front of the vehicle to acquire the captured image (S20). In this case, as shown in Fig. 9, white lines L on a vehicle vicinity side (a lower side in a captured image X2) in the regions illuminated with the first light distribution pattern P1 are detected (S22), but for white lines on a far side (an upper side in the captured image X2), the white lines are not detected due to insufficient amount of light. Therefore, as shown in Fig. 9, the control unit estimates the estimated white lines L" in the white line non-detection area A2 based on the respective white lines L detected in the white line detection area A1 (S24).

The control unit determines a region between the detected white lines L and between the estimated white lines L" as a traveling area R3 and a region on the outer side of the traveling area R3 as a road shoulder area R4 (S26), and controls the LED unit 34 to form a light distribution pattern in which the regions are separately illuminated. Accordingly, a light distribution pattern suitable for both the traveling area R3 and the road shoulder area R4 can be formed. For example, the control unit controls the LED unit 34 to form the light distribution pattern P2 in which the road shoulder area R4 is brighter than the traveling area R3. Specifically, the driving current of LED 34a for illuminating the road shoulder area R4 is increased to increase the illumination intensity of the corresponding LED 34a (S28). Accordingly, a road shoulder structure (three-dimensional object) in the road shoulder area R4 on an outer side of the white line L and the estimated white line L" is determined (S30). Here, the road shoulder structure includes plants, trees, artificial objects such as a delineator 36, a step 38, and a traffic sign, or the like.

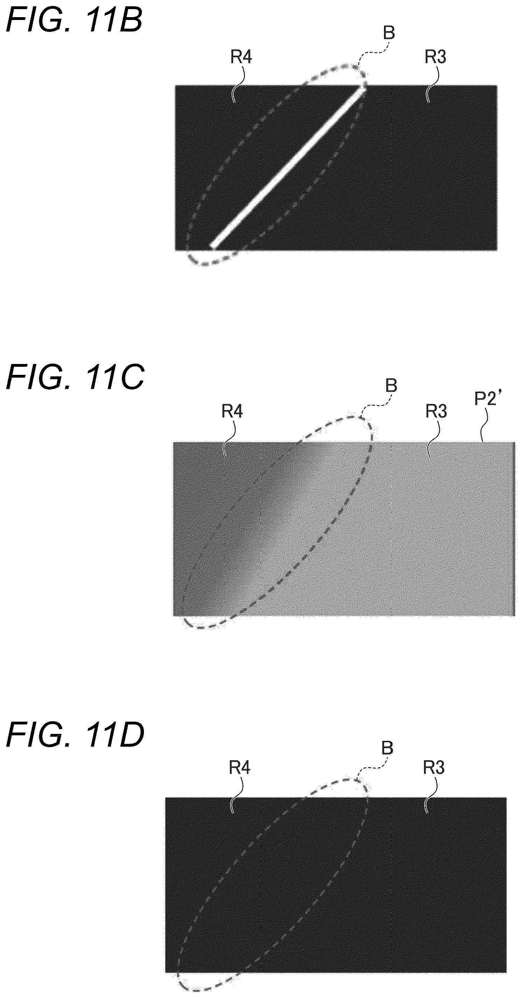

Next, a problem of image analysis in a case where an image of the light distribution pattern P2 in which the road shoulder area R4 is brighter than the traveling area R3 is captured by a camera will be described. Fig. 11A is a diagram showing an example of a light distribution pattern in which brightness at a boundary of each area changes steeply. Fig. 11B is a diagram showing an image obtained by performing image analysis (edge enhancement or binarization) on the light distribution pattern shown in Fig. 11A. Fig. 11C is a diagram showing an example of a light distribution pattern in which the brightness at the boundary of each area changes gently (the brightness changes gradually). Fig. 11D is a diagram showing an example of an image obtained by performing image analysis (edge enhancement or binarization) on the light distribution pattern shown in Fig. 11C.

As shown in Fig. 11A, when a boundary between the road shoulder area R4 and the traveling area R3 in the light distribution pattern P2 is clear, as shown in Fig. 11B, the camera unit 12 recognizes a boundary B as the white line. When the boundary B coincides with an actual white line L, no problem occurs, but when the boundary B deviates from the actual white line L, the white line is erroneously detected.

Therefore, in the present embodiment, as shown in Fig. 11C, the brightness of the boundary B between the road shoulder area R4 and the traveling area R3 in a light distribution pattern P2' is changed in multiple stages. Accordingly, the boundary B between the road shoulder area R4 and the traveling area R3 in the light distribution pattern P2' can be prevented from being erroneously detected as a lane marking such as the white line.

### (Second Embodiment)

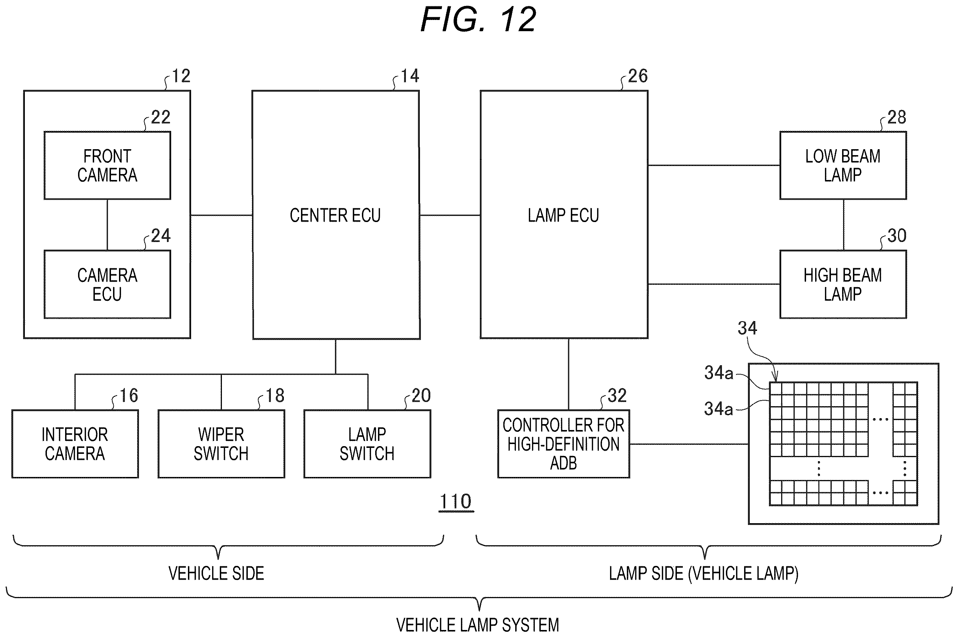

Next, a vehicle lamp system 110 according to a second embodiment will be described. Fig. 12 is a block diagram showing the vehicle lamp system according to the second embodiment. The vehicle lamp system 110 is different from the vehicle lamp system 10 according to the first embodiment in further including an interior camera 16 and a wiper switch 18.

A first light distribution pattern formed by the vehicle lamp system 110 in normal weather is, for example, a light distribution pattern formed by a method similar to that of the vehicle lamp system 10 of the first embodiment. The normal weather is determined by the center ECU 14 based on, for example, a state of the wiper switch 18 or a raindrop sensor that is not illustrated, the image information captured by the front camera 22, and the like. Specifically, when the wiper switch 18 is turned on, the bad weather (rainy weather) is determined, and when the wiper switch 18 is turned off, the normal weather (fine weather) is determined, and the weather information is used in the subsequent determination of the light distribution pattern.

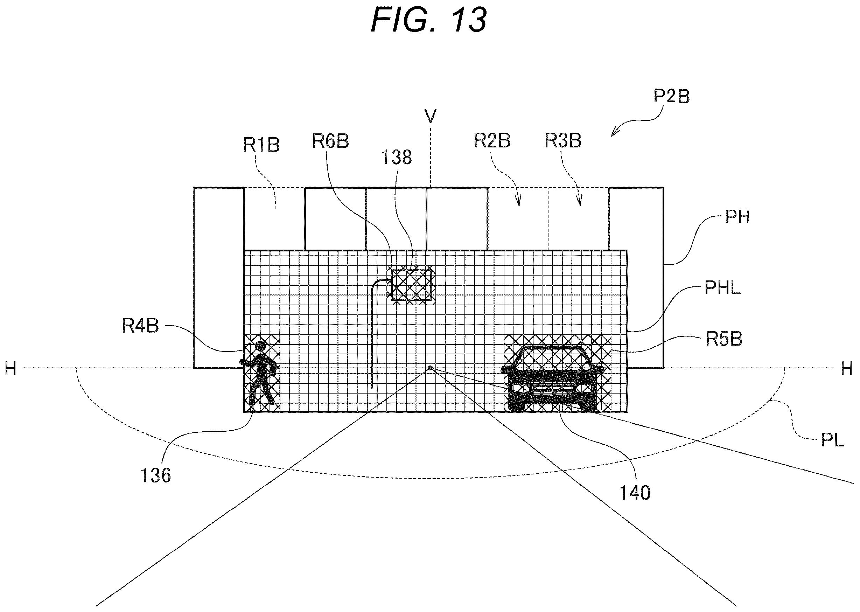

Next, a second light distribution pattern applied when a target or a reflection object is present in front of the vehicle will be described. Here, the target is, for example, a pedestrian, a vehicle, a signal, a street light, various traffic signs, or a delineator. The reflection object in the target refers to various traffic signs or delineators whose visibility is improved by reflection of light emitted from the vehicle lamp. Fig. 13 is a diagram schematically showing an example of the second light distribution pattern formed in normal weather.

The target shown in Fig. 13 is a pedestrian 136, a traffic sign 138, and an oncoming vehicle 140. The camera unit 12 detects a position and a type of the target based on the image information captured by the front camera 22, and transmits the information to the lamp ECU 26. In a case of normal weather, the center ECU 14 determines a partial-light-blocking position and a dimming amount of light according to the position and type of the target to select the desired second light distribution pattern. The lamp ECU 26 and the controller 32 control the illumination states of the low beam lamp 28, the high beam lamp 30, and the LED unit 34 to form the selected second light distribution pattern.

The low beam light distribution pattern PL in a second light distribution pattern P2B shown in Fig. 13 is similar to the first light distribution pattern P1. Further, the high beam light distribution pattern PH in the second light distribution pattern P2B is in a state where partial regions R1B to R3B corresponding to positions of the pedestrian 136 and the oncoming vehicle 140 are not illuminated (light-blocked). Further, the ADB light distribution pattern PHL in the second light distribution pattern P2B is in a state where partial regions R4B and R5B corresponding to the positions of the pedestrian 136 and the oncoming vehicle are not illuminated (light-blocked), and a partial region R6B corresponding to a position of the traffic sign 138 which is the reflection object is dimmed. A reason why the partial region R6B corresponding to the position of the traffic sign 138 is dimmed is to prevent glare given to the driver by reflected light obtained by illuminating the traffic sign 138 with a high beam.

In the second light distribution pattern, since the partial region R6 is illuminated with dimmed light, the reflected light of the traffic sign 138 is hardly reflected on a road surface in the normal weather in which the road surface is dry. However, in bad weather such as rainy weather, even if the partial region R6B is illuminated with dimmed light, the reflected light of the traffic sign 138 may be reflected on a wet road surface, which is a cause of a decrease in visibility of the driver.

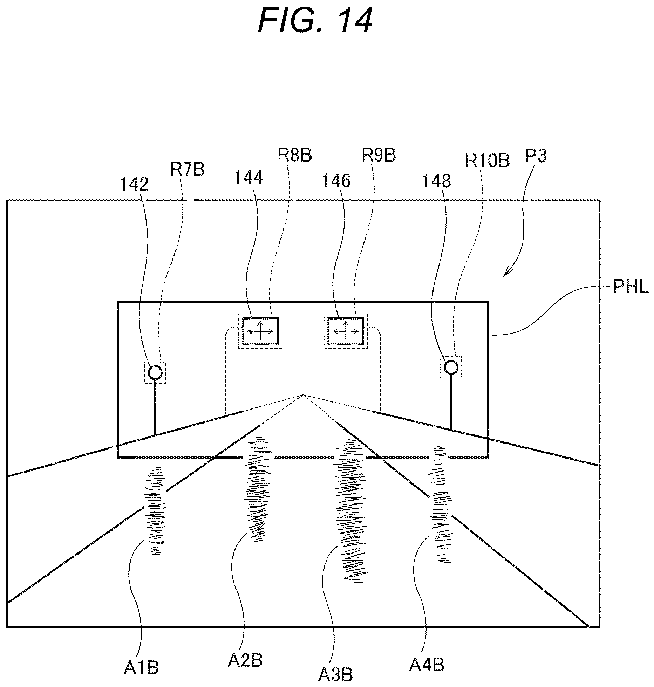

Fig. 14 is a schematic diagram illustrating a state in which light illuminating the reflection objects is reflected on the road surface. In Fig. 14, only regions of the ADB light distribution pattern PHL are illustrated. In Fig. 14, light reflected by traffic signs 142, 144, 146, and 148 is reflected on the wet road surface as long and narrow reflection images A1B to A4B. Therefore, driver's attention is attracted due to the presence of the reflection images A1B to A4B, so that visibility around the vehicle may decrease.

Therefore, in the vehicle lamp system according to the present embodiment, in a case where it is rainy weather and the reflection objects are present in front of the vehicle, the vehicle lamp is controlled to perform illumination with a third light distribution pattern P3 in which partial regions R7B to R10B in which the respective reflection objects are present are darker than corresponding partial regions in the second light distribution pattern. Accordingly, the reflection of the reflection objects on the road surface is reduced. Hence, the visibility around the vehicle in bad weather such as the rainy weather is improved.

In this way, the vehicle lamp system 10 according to the present embodiment includes a vehicle lamp (the low beam lamp 28, the high beam lamp 30, and the LED unit 34) capable of illuminating a front of the vehicle, and a control unit including various ECUs (the camera ECU 24, the center ECU 14, and the lamp ECU 26) and the controller 32 that control the vehicle lamp to illuminate the front of the vehicle with a light distribution pattern determined based on weather information correlated with a weather state around the vehicle and reflection object information on a reflection object present in front of the vehicle. There are no particular limitations on which ECU or controller performs the various detections, determinations, and controls, and these can be selected appropriately.

When it is normal weather and no reflection object is present in front of the vehicle based on an output result of a camera, a sensor, or the like, the control unit controls the vehicle lamp to perform illumination with the first light distribution pattern P1 (see Fig. 2), when it is normal weather and a reflection object is present in front of the vehicle, the control unit controls the vehicle lamp to perform illumination with the second light distribution pattern P2B (see Fig. 13) in which a partial region where the reflection object is present is darker than a corresponding partial region in the first light distribution pattern, and when it is rainy weather and a reflection object is present in front of the vehicle, the control unit controls the vehicle lamp to perform illumination with the third light distribution pattern P3 (see Fig. 14) in which the partial regions R7B to R10B where the reflection objects are present are darker than corresponding partial regions in the second light distribution pattern.

Assuming that brightness A1 of each light emitting region in the ADB light distribution pattern PHL in a case where no reflection object is present is 100, when it is normal weather and a reflection object is present, brightness A2 of the partial region (light emitting region) where the reflection object is present in the ADB light distribution pattern PHL may be 70, and when it is rainy weather and a reflection object is present, brightness A3 of the partial region (light emitting region) where the reflection object is present in the ADB light distribution pattern PHL may be 40 (A1 > A2 > A3 > 0). Alternatively, a current value for driving the LED in each light emitting region (partial region) in the first light distribution pattern P1 to the third light distribution pattern P3 may be set in advance to achieve the above-described order of brightness.

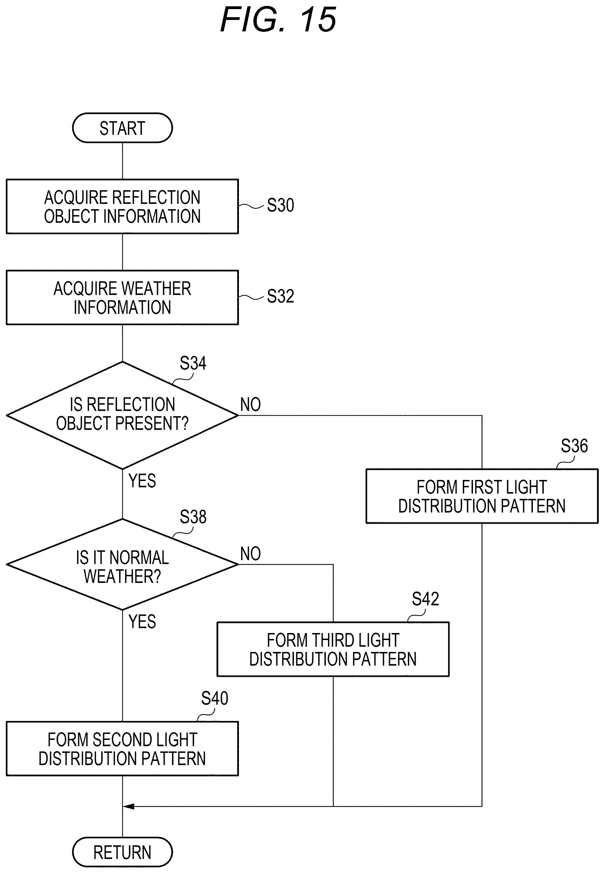

Fig. 15 is a flowchart illustrating a light distribution control method according to the present embodiment. In the method, the vehicle lamp is controlled to illuminate the front of the vehicle with a light distribution pattern determined based on the weather information correlated with the weather state around the vehicle and the reflection object information of the reflection object present in front of the vehicle.

First, the center ECU 14 uses the camera unit 12 to acquire the reflection object information present in front of the vehicle (S30). The reflection object information is a type of the reflection object and a position on a virtual screen 25 m in front of the vehicle. Next, the center ECU 14 acquires the weather information based on information from the wiper switch 18 and the raindrop sensor. Next, it is determined whether a reflection object is present in front of the vehicle (S34). When no reflection object is present (No in S34), the lamp ECU 26 and the controller 32 control the vehicle lamp to form the first light distribution pattern P1 regardless of a result of the weather information (S36). When a reflection object is present (Yes in S34) and it is normal weather (Yes in S38), the lamp ECU 26 and the controller 32 control the vehicle lamp to form the second light distribution pattern P2B (S40). On the other hand, in a case of rainy weather that is not normal weather (No in S38), the lamp ECU 26 and the controller 32 control the vehicle lamp to form the third light distribution pattern P3 (S42). A program that causes the control device to execute each step of such a control method is also a part of aspects of the present disclosure.

### (Modification)

Next, a modification of the vehicle lamp system according to the second embodiment will be described. Descriptions of the same configurations as those of the vehicle lamp system 110 will be omitted as appropriate. The vehicle lamp system according to the modification selects the second light distribution pattern and the third light distribution pattern based on presence or absence of reflection of the reflected light, that is reflected by the reflection object, on the road surface, instead of the weather information.

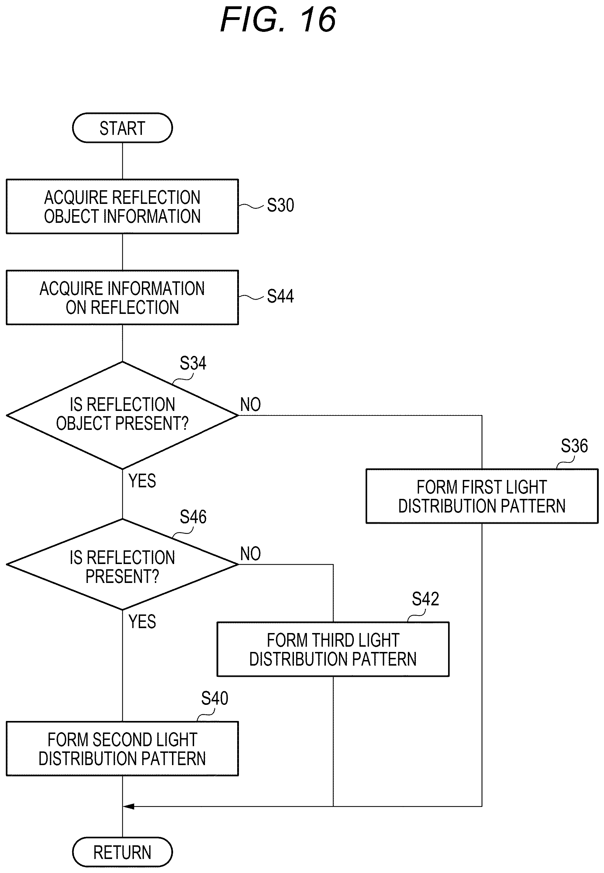

Fig. 16 is a flowchart illustrating a light distribution control method according to a modification. In the method, the vehicle lamp is controlled to illuminate the front of the vehicle with a light distribution pattern determined based on the reflection object information of the reflection object present in front of the vehicle and the presence or absence of reflection of the reflected light, that is reflected by the reflection object, on the road surface. In the description of Fig. 16, the same steps as those described in Fig. 15 are denoted by the same reference numerals, and descriptions thereof will be omitted.

In the flowchart of Fig. 16, after reflection object information is acquired (S30), reflection information is acquired (S44). The presence or absence of reflection on the road surface is determined using the image information in which a position and type of the reflection object are detected by the camera unit 12. When a reflection object is present (Yes in S34) and the reflection on the road surface is not present (Yes in S46), the lamp ECU 26 and the controller 32 control the vehicle lamp to form the second light distribution pattern P2B (S40). On the other hand, when the reflection on the road surface is present (No in S46), the lamp ECU 26 and the controller 32 control the vehicle lamp to form the third light distribution pattern P3 (S42). A program that causes the control device to execute each step of such a control method is also a part of aspects of the present disclosure.

Accordingly, when a reflection object is present in front of the vehicle and the reflection is present, the vehicle lamp illuminates the front of the vehicle with the third light distribution pattern P3 in which the partial region where the reflection object is present is darker than the corresponding partial region in the second light distribution pattern, and thus the reflection of the reflection object on the road surface is reduced. Hence, the visibility around the vehicle in bad weather is improved. Further, even if there is no weather information obtained using another device such as the wiper switch 18 or the raindrop sensor, whether to illuminate the front of the vehicle with the third light distribution pattern can be determined.

The control unit in the vehicle lamp system according to the modification controls the vehicle lamp to perform illumination with the third light distribution pattern P3 when a reflected region having a predetermined luminance or more is detected based on the image information obtained by the front camera 22 capturing an image of the road surface. Accordingly, when a reflection object whose reflection has a large influence due to a high luminance is present, the vehicle lamp can illuminate the front of the vehicle with the third light distribution pattern, and when a reflection object whose reflection has a small influence due to a low luminance is present, the vehicle lamp can illuminate the front of the vehicle with the second light distribution pattern in which the partial region where the reflection object is present is brighter than in the third light distribution pattern.

Further, the control unit may control the vehicle lamp to perform illumination with the third light distribution pattern when a reflected region having a predetermined luminance or more is detected based on the image information obtained by the front camera 22 capturing an image of the road surface and an area of the reflected region is larger than a predetermined area.

Further, the control unit may control the vehicle lamp to perform illumination with the third light distribution pattern when a line-of-sight of the driver is directed to a front side from the vehicle by a predetermined distance (for example, 10 mm) based on line-of-sight information or face direction information of the driver in the vehicle captured by the interior camera 16. The interior camera 16 may be an infrared camera provided on an instrument panel. Accordingly, even if there is no information from the camera directly grasping the presence or absence of reflection, the vehicle lamp can illuminate the front of the vehicle with the third light distribution pattern based on the line-of-sight information or the face direction information of the driver in the vehicle.

Further, the control unit may change a dimming rate of the partial region where the reflection object is present in the third light distribution pattern according to the size and the brightness of the reflection on the road surface. For example, the control unit may increase the dimming rate (relatively dark) when the reflection is large, and decrease the dimming rate (relatively bright) when the reflection is small.

### (Third Embodiment)

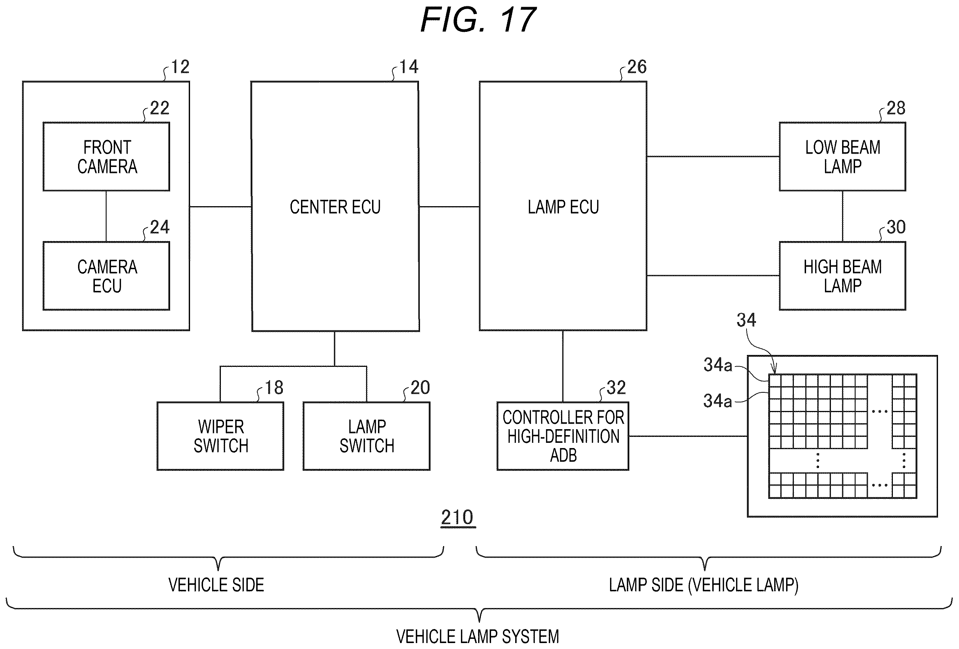

Next, a vehicle lamp system 210 according to a third embodiment will be described. Fig. 17 is a block diagram showing the vehicle lamp system 210 according to the third embodiment. The vehicle lamp system 210 according to the third embodiment is different from the vehicle lamp system 10 according to the first embodiment in further including the wiper switch 18. For the LED unit 34, a light source and an optical member are appropriately selected to illuminate a region centered on the intersection of the H-H line and the V line, and the vehicle lamp is configured to illuminate the front of the vehicle with light emitted from the LED unit 34.

In the vehicle lamp system 210 of the third embodiment, the controller 32 is also configured to form a plurality of light distribution patterns, in which the brightness of the partial region is different, by changing the illumination state of a part of light emitting regions among the plurality of light emitting regions. In other words, the controller 32 controls the vehicle lamp to perform illumination with a selected light distribution pattern by controlling an amount of light emitted from each of the plurality of light emitting regions. Accordingly, various light distribution patterns can be formed by one LED unit 34. Further, even if there are a plurality of partial regions in each of which a reflection object is present, light distribution patterns obtained by adjusting the brightness of each partial region can be formed.

Next, visibility on a pitch black suburban road at night with no street lights or illumination will be described. When no preceding vehicle or oncoming vehicle is present, visibility of a vehicle traveling on a pitch black road at night is often improved by illuminating the front with a high beam light distribution pattern. In this case, not only a center line but also road outer lines on both sides of a road can be visually recognized without any problem. However, when the road surface is wet in rainy weather, light of a headlamp is scattered by a water film and does not return to vehicle lateral sides as reflected light. Therefore, a situation may occur in which a lane width of the road on which the vehicle is traveling is difficult to know even though the front is illuminated with the high beam light distribution pattern. Therefore, the inventor of the present application has conceived a possibility that a road shoulder can be determined by using a phenomenon that a road surface wet in rainy weather has a low reflectance, and a three-dimensional object on the road shoulder has a high reflectance (reflected light easily returns).

The vehicle lamp system 210 according to the present embodiment can illuminate a light distribution pattern for road shoulder determination, which is different from the high beam light distribution pattern, before, after, or during a situation in which the high beam light distribution pattern is formed. Specifically, the controller 32 controls the LED unit 34 to illuminate the front of the vehicle with a determination light distribution pattern for determining the road shoulder in rainy weather. There are no particular limitations on which ECU or controller performs the various detections, determinations, and controls, and these may be selected appropriately.

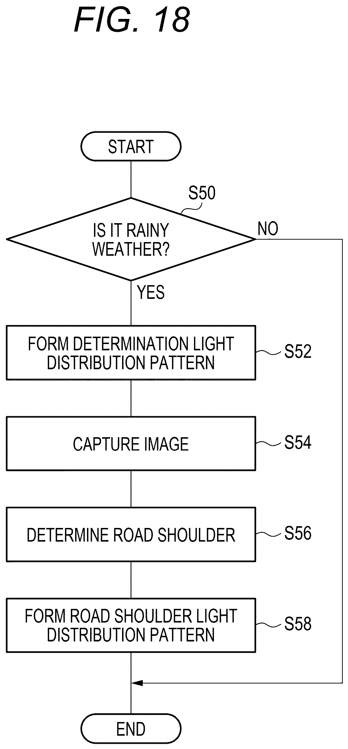

Fig. 18 is a flowchart illustrating an example of a light distribution control method according to the present embodiment. In the present embodiment, any one of the camera ECU 24, the center ECU 14, the lamp ECU 26, and the controller 32 (hereinafter, these may be collectively referred to as a control unit) determines whether to form the high beam light distribution pattern based on an operation on the lamp switch 20 from the driver or the information from the camera unit 12.

The control unit starts the control shown in Fig. 18 when a signal for performing illumination with the first light distribution pattern P1, which is a high beam light distribution pattern, is acquired. Next, the control unit determines whether it is rainy weather based on image information (road surface image or the like) from the camera unit 12 or operation information from the wiper switch 18 (S50). When it is determined that it is not rainy weather (No in S50), the control unit temporarily ends the control shown in Fig. 18.

When the control unit determines that it is rainy weather (Yes in S50), the controller 32 forms the determination light distribution pattern for determining the road shoulder (S52), and controls the LED unit 34 to illuminate the front of the vehicle with the determination light distribution pattern. When an attempt is made to perform illumination with a high beam light distribution pattern, the visibility in front of the vehicle is often reduced. Therefore, by performing illumination with the determination light distribution pattern at an initial stage of the high beam light distribution pattern in response to acquisition of the signal for performing illumination with the high beam light distribution pattern, the road shoulder can be easily determined early.

The controller 32 according to the present embodiment controls the LED unit 34 to illuminate the front of the vehicle with the determination light distribution pattern brighter than the high beam light distribution pattern. Specifically, the controller 32 drives each LED 34a of the LED unit 34 with a driving current Ib larger than a driving current Ia of each LED 34a of the LED unit 34 when performing illumination with the ADB light distribution pattern PHL in the first light distribution pattern P1. Accordingly, the road shoulder can be determined more accurately.

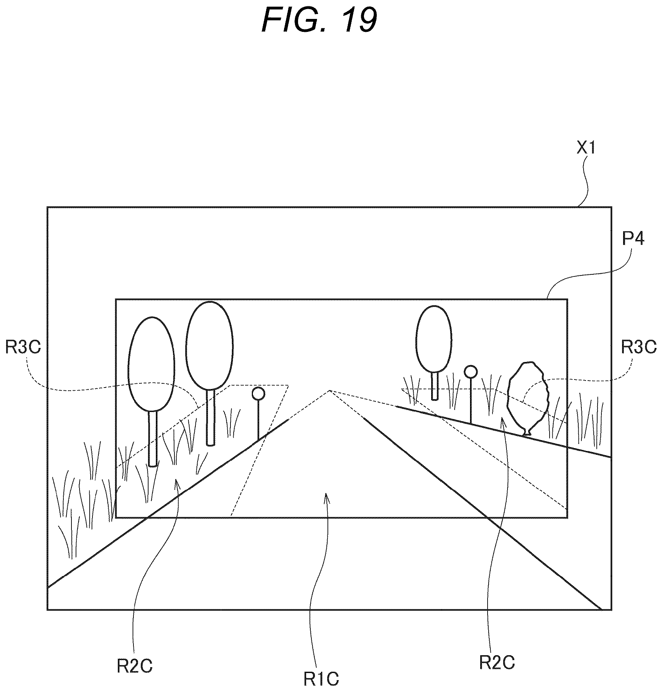

Fig. 19 is a schematic diagram illustrating a road shoulder light distribution pattern for improving recognition of a lane width. The camera unit 12 captures an image at a timing when the front of the vehicle is illuminated with the determination light distribution pattern formed in step S12 (S54). In the captured image X1 shown in Fig. 19, the control unit determines a road shoulder portion using a phenomenon that a wet road surface R1C has a low reflectance and a three-dimensional object on a road shoulder R2C has a high reflectance (S56).

Specifically, the control unit determines, as the road shoulder R2C, a region including a portion whose intensity of the reflected light has a value greater, by a predetermined value or more, than an intensity of the reflected light of a portion corresponding to the road surface R1C in the image information obtained by capturing an image of the front of the vehicle illuminated with the determination light distribution pattern. Accordingly, in a situation in which the intensity of the reflected light from the road surface decreases, such as in rainy weather, and it is difficult to recognize the lane width, the road shoulder can be determined.

Then, the control unit controls the LED unit 34 to perform illumination with a road shoulder light distribution pattern P4 in which at least a partial region R3C in the region determined as the road shoulder is brighter than in a normal light distribution pattern. Specifically, the controller 32 controls the LED unit 34 such that an amount of light emitted from a part of the LEDs 34a of the LED unit 34 to illuminate the region R3C increases. Accordingly, the driver easily recognizes the lane width. Further, according to a difference between the intensity of the reflected light in the portion corresponding to the road surface R1C and the intensity of the reflected light in the portion corresponding to the road shoulder R2C, a brightening rate (brightness) of the portion corresponding to the region R3C in the road shoulder light distribution pattern may be changed. For example, the brightening rate may be increased (made relatively bright) when the difference in intensity is large, and the brightening rate may be decreased (made relatively dark) when the difference in intensity is small.

When the situation in which the intensity of the reflected light from the road surface decreases is eliminated, it is not necessary to increase the light illumination for the road shoulder with the road shoulder light distribution pattern. For example, even in a situation in which the vehicle travels while illuminating the front of the vehicle with the road shoulder light distribution pattern in rainy weather, the situation may change to a situation in which the road shoulder can be determined when the water film on the road surface is gradually eliminated due to a decrease in rainfall. Therefore, the control unit periodically captures an image of the front of the vehicle in a state where the front of the vehicle is illuminated with the determination light distribution pattern, and controls the LED unit 34 to stop subsequent illumination with the road shoulder light distribution pattern P4 when the difference between the intensity of the reflected light of the portion determined as the road shoulder and the intensity of the reflected light of the portion corresponding to the road surface R1C is equal to or less than a predetermined value D (including a case where there is no difference) based on the captured image information. Accordingly, by stopping unnecessary irradiation with the light distribution pattern, discomfort felt by the driver due to unnecessary switching of the light distribution pattern can be reduced.

Next, a case where the road shoulder is determined based on image information obtained from a plurality of captured images will be described. The control unit performs illumination with a first determination light distribution pattern and a second determination light distribution pattern darker than the first determination light distribution pattern as the determination light distribution pattern at a predetermined timing (for example, a constant cycle) during traveling in rainy weather. The second determination light distribution pattern may be the same as or different from the normal ADB light distribution pattern PHL. The control unit controls the LED unit 34 to perform illumination with the road shoulder light distribution pattern, in which a region determined as the road shoulder is brighter than in a normal light distribution pattern, based on image information obtained by capturing an image of the front of the vehicle illuminated with the first determination light distribution pattern and image information obtained by capturing an image of the front of the vehicle illuminated with the second determination light distribution pattern. Accordingly, the road shoulder can be determined more accurately.

The formation of the first determination light distribution pattern or the second determination light distribution pattern may be for such a short time that the formation is not noticeable to human eyes while driving. Accordingly, discomfort felt by the driver due to switching the light distribution pattern can be reduced.

### (Fourth Embodiment)

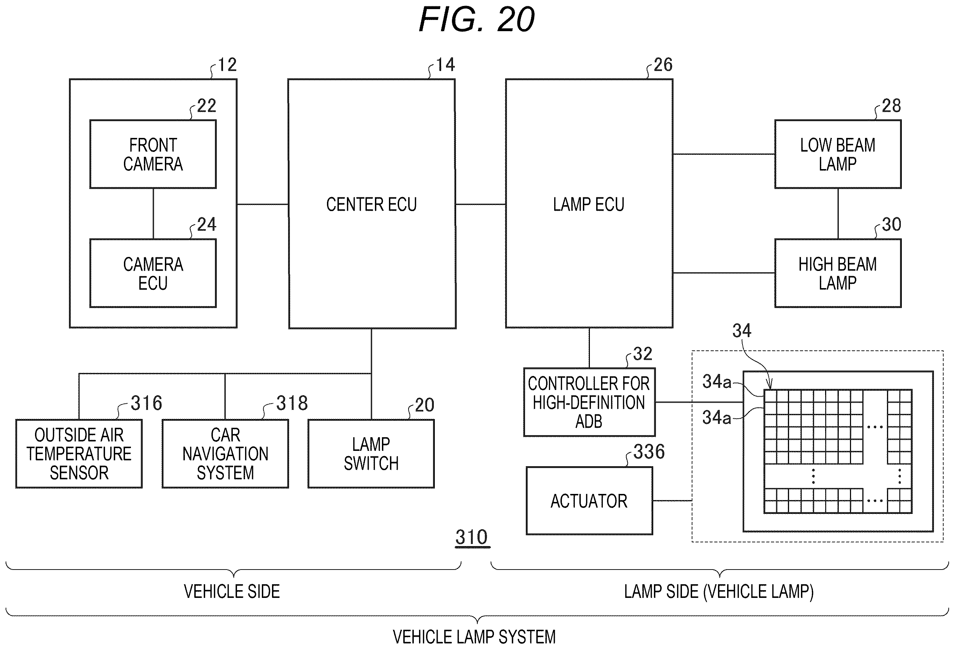

Next, a vehicle lamp system 310 according to a fourth embodiment will be described. Fig. 20 is a block diagram showing the vehicle lamp system according to the present embodiment. The vehicle lamp system 310 is different from the vehicle lamp system 10 according to the first embodiment in further including an outside air temperature sensor 316 and a car navigation system 318.

The light distribution pattern P1 according to the fourth embodiment is a pattern, as shown in Fig. 2, in which the low beam light distribution pattern PL formed by the low beam lamp 28, the high beam light distribution pattern PH formed by the high beam lamp 30, and the ADB light distribution pattern PHL formed by the LED unit 34 overlap.

Similarly to the third embodiment, for the LED unit 34, a light source and an optical member are appropriately selected to illuminate a region centered on the intersection of the H-H line and the V line, and the LED unit 34 is a vehicle lamp capable of illuminating the front of the vehicle with light emitted from the LED unit 34.

Further, the controller 32 is configured to form a plurality of light distribution patterns, in which the brightness of the partial region is different, by changing an illumination state of a part of light emitting regions among the plurality of light emitting regions. In other words, the controller 32 controls the vehicle lamp to perform illumination with a selected light distribution pattern by controlling an amount of light emitted from each of the plurality of light emitting regions. Accordingly, various light distribution patterns can be formed by one LED unit 34. Further, even if there are a plurality of partial regions in each of which a reflection object is present, light distribution patterns obtained by adjusting the brightness of each partial region can be formed.

Next, a situation in which the vehicle travels on a pitch black suburban road at night with no street lights or illumination when snow accumulates will be described. In a situation in which no snow accumulates on the road surface, by illuminating the road surface with light from the headlamp, it is possible to confirm road surface markings indicating a shape or a traveling direction of a road, such as the center line, the road outside lines, or side strips. However, when snow accumulates, the road surface markings are not visible at all even when the road surface is illuminated by the light from the headlamp, so that it may be difficult for the driver to accurately grasp the shape of the road and the lane width. Therefore, the inventor of the present application has focused on ruts formed by a preceding vehicle traveling in front of the host vehicle.

The ruts that are formed when snow accumulates are marks made by wheels of the preceding vehicle, but when the entire road surface is covered in snow, the front of the vehicle is completely white, making it difficult to see locations and shapes of the ruts even when the headlamp illuminates the entire road surface.

Therefore, the vehicle lamp system 310 according to the fourth embodiment can improve rut recognition by forming a road surface drawing light distribution pattern whose shape changes depending on presence or absence of the ruts on the road surface. Specifically, the controller 32 controls the driving of the low beam lamp 28 and the LED unit 34 such that the front of the vehicle is illuminated with a predetermined low beam light distribution pattern and the road surface drawing light distribution pattern when a snow accumulation situation in front of the vehicle is detected. There are no particular limitations on which ECU or controller performs the various detections, determinations, and controls, and these may be selected appropriately.

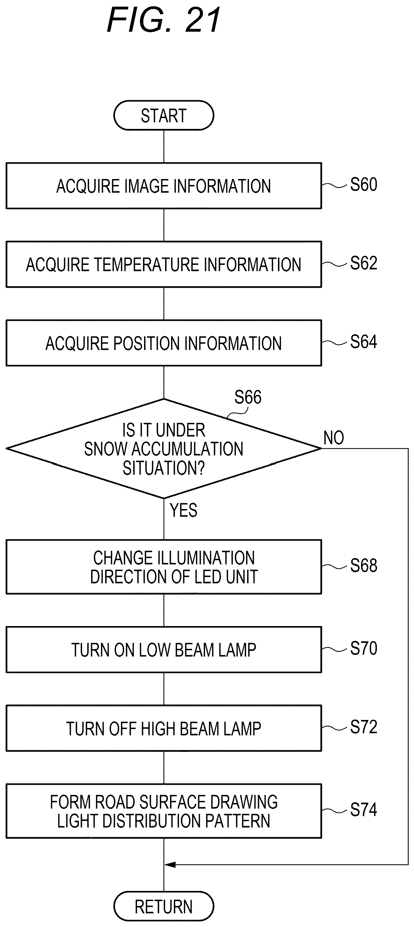

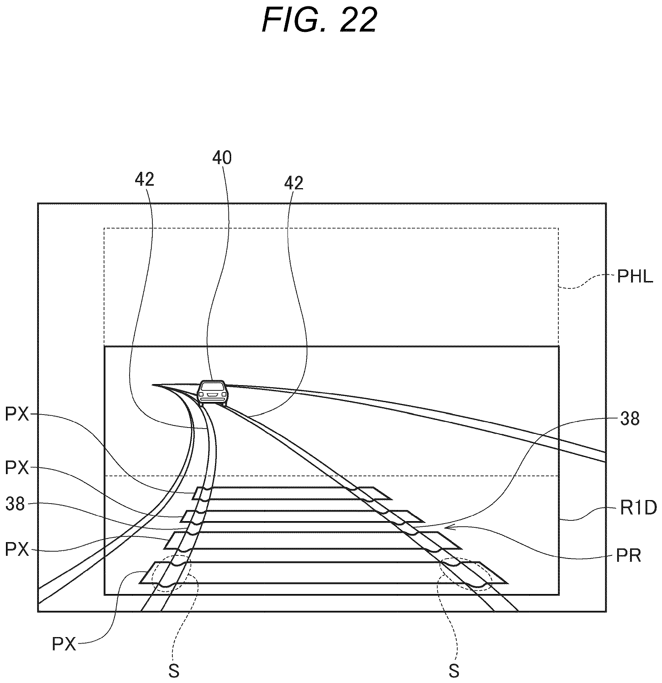

Fig. 21 is a flowchart illustrating an example of a light distribution control method according to the present embodiment. Fig. 22 is a schematic diagram illustrating a road surface drawing light distribution pattern for improving the rut recognition. The vehicle lamp system 310 according to the present embodiment includes a vehicle lamp capable of illuminating a front of the vehicle, and a control unit that controls driving of the vehicle lamp according to information on a light distribution pattern to be formed by the vehicle lamp. In the present embodiment, any one of the camera ECU 24, the center ECU 14, the lamp ECU 26, and the controller 32 (hereinafter, these may be collectively referred to as a control unit) determines whether a snow accumulation situation is present and forms the road surface drawing light distribution pattern having a predetermined shape depending on the situation. Further, the vehicle lamp includes the low beam lamp 28 that forms the low beam light distribution pattern, the LED unit 34 whose shape changes depending on the presence or absence of ruts, and the high beam lamp 30 that forms the high beam light distribution pattern.

The control unit starts the control shown in Fig. 21 when a signal for turning on any one of the low beam lamp 28, the high beam lamp 30, and the LED unit 34 by the lamp switch 20 is acquired. Next, the control unit acquires the image information (road surface image or the like) from the camera unit 12 (S60). If necessary, information based on a temperature outside the vehicle is acquired from the outside air temperature sensor 316 (S62), and position information of the host vehicle is acquired from the car navigation system 318 (S64).

The control unit can analyze information based on the captured image of the front of the vehicle and determine whether the road surface in front is a snow-accumulated road or a dry road from luminance information and color information. Accordingly, the snow accumulation situation can be accurately detected. Further, the control unit may take into account information that is based on a temperature outside the vehicle detected by the outside air temperature sensor 316. For example, if the outside air temperature is below a freezing point, a possibility of snow accumulation increases. Further, the control unit may determine that the snow accumulation situation is present in a case where even though a road marking such as the center line (white line) is supposed to be present on the road surface in front of the vehicle from position information of the host vehicle acquired from the car navigation system 318, only a high luminance region (reflected light is white) in which the road marking cannot be identified from the image information can be detected. Accordingly, the snow accumulation situation can be more accurately detected. When it is determined that there is no snow accumulation situation (No in S66), the control unit temporarily ends the control shown in Fig. 21.

When the control unit determines that the snow accumulation situation is present (Yes in S66), the LED unit 34 that is illuminating upper and lower regions across a horizontal line with the ADB light distribution pattern PHL (see Fig. 2) is changed in illumination direction to a vehicle front side (downward) using an actuator 36 that changes the illumination direction upwardly and downwardly (S68). That is, the control unit controls a movement of the actuator 36 such that the illumination direction of the LED unit 34 is more downward when the snow accumulation situation in front of the vehicle is detected than when the snow accumulation situation is not detected. Accordingly, the road surface drawing light distribution pattern PR can be formed in a road surface region R1D on a front side in front of the vehicle by using the LED unit 34 that mainly illuminates a region farther than the front side in front of the vehicle with the predetermined ADB light distribution pattern PHL during normal traveling without snow accumulation.

At this time, the vehicle lamp system 310 illuminates the road surface in front of the vehicle in a wide range with the low beam light distribution pattern PL by turning on the low beam lamp 28 (S70). Further, the vehicle lamp system 310 turns off the high beam lamp 30 (S72), thereby easily directing the line-of-sight of the driver to the road surface on the vehicle front side rather than the far side.

In this way, in the vehicle lamp system 310, the LED unit 34 forms the road surface drawing light distribution pattern PR whose shape changes depending on the presence or absence of ruts on the road surface when snow accumulates, and thus the ruts are easily recognized. That is, the control unit controls the driving of the LED unit 34 such that the road surface drawing light distribution pattern PR is drawn on the road surface as the light distribution pattern when the snow accumulation situation in front of the vehicle is detected. Accordingly, the specific road surface drawing light distribution pattern PR whose shape changes depending on the presence or absence of ruts can be formed on the road surface using the LED unit 34 capable of forming a plurality of light distribution patterns. Ruts 38 at the time of snow accumulation are a traveling trajectory formed by the preceding vehicle 40, and if the driver can recognize the ruts, it is easy to predict a road shape and a road width on which the vehicle travels even in a situation in which the road marking is not visible due to snow accumulation.

Here, the road surface drawing light distribution pattern PR is preferably a pattern in which bright portions and dark portions crossing the road surface in front of the vehicle are periodic. For example, the control unit according to the present embodiment controls the driving of the LED unit 34 such that the road surface drawing light distribution pattern PR, in which a plurality of strip-shaped patterns PX as shown in Fig. 22 are arranged at intervals in front of the vehicle, is drawn in the road surface region R1D. When the road surface drawing light distribution pattern PR having a highly symmetrical shape such as a periodic bright-dark pattern is formed in the road surface region R1D having the ruts 38, distortion S in a part of each pattern PX is easily noticeable, and thus the driver can easily recognize the locations of the ruts 38. In other words, the control unit detects presence or absence and a position of the distortion S in a part of the pattern PX from the information that is based on the captured image, and determines the presence or absence and the shape of the ruts. Examples of the periodic pattern include a zigzag pattern and a lattice pattern, in addition to the above-described pattern in which a plurality of strip shapes are arranged. That is, a highly symmetrical pattern having a linear contour or a regular form is preferable.

As described above, when the control unit according to the present embodiment detects the snow accumulation situation in front of the vehicle, the road surface drawing light distribution pattern PR is formed, thereby making it easy to recognize a part of the rut 38. The control unit estimates a farther rut 42 from a trajectory of a part of each rut 38 determined from the presence of distortion S, and controls the driving of the vehicle lamp such that follow-up illumination with the road surface drawing light distribution pattern PR is performed in a region including the rut 42. Accordingly, the driver easily recognizes a direction in which the host vehicle is to travel at an earlier stage. Further, the control unit can determine how much the road shape is curved by calculating a curvature of the rut from the image information. Therefore, the direction in which the host vehicle is to travel can be guided without using the information from the car navigation system 318.

Although the present disclosure has been described with reference to the above embodiments, the present disclosure is not limited to the above embodiments, and appropriate combinations and replacements of the configurations of the embodiments are also included in the present disclosure. Based on the knowledge of a person skilled in the art, it is possible to appropriately rearrange the combinations and processing orders in each embodiment, and to make various design changes and other modifications to the embodiment, and embodiments to which such modifications are added are also within the scope of the present disclosure.

The invention of the vehicle lamp system according to each of the first embodiment to the fourth embodiment may be regarded as an invention of a single control device including a control unit. Further, the invention of the vehicle lamp system according to each of the first embodiment to the fourth embodiment may be regarded as an invention of a non-transitory computer-readable medium in which a program to be executed by a control unit that controls the vehicle lamp is recorded.

The present application appropriately refers to contents disclosed in Japanese Patent Application No. 2023-006836 filed on January 19, 2023, Japanese Patent Application No. 2023-005346 filed on January 17, 2023, Japanese Patent Application No. 2023-005347 filed on January 17, 2023, and Japanese Patent Application No. 2023-016402 filed on February 6, 2023.

## Claims

1. A vehicle lamp system comprising:
a vehicle lamp configured to illuminate a front of a vehicle; and
a control unit configured to control driving of the vehicle lamp according to information on a light distribution pattern to be formed by the vehicle lamp,
wherein the control unit is configured to control the driving of the vehicle lamp to perform illumination to reach a distant region farther than a region where a white line is detected based on image information obtained by capturing an image of the front of the vehicle.

2. The vehicle lamp system according to claim 1,
wherein the control unit is configured to control the vehicle lamp to form a light distribution pattern in which a white line region corresponding to a shape of the detected white line is brighter than a periphery of the white line region.

3. The vehicle lamp system according to claim 1,
wherein the control unit is configured to control the vehicle lamp to form a light distribution pattern in which a white line region corresponding to a shape of the detected white line and a shape of an estimated white line estimated from the detected white line is brighter than a periphery of the white line region.

4. The vehicle lamp system according to claim 2,
wherein the control unit is configured to control the vehicle lamp to form the light distribution pattern in which a region in a range of 1.3° to 2.0° on both sides of a V-V line and 0.5° to 0.8° below an H-H line on a screen in front of the vehicle is illuminated as the white line region.

5. The vehicle lamp system according to claim 1,
wherein the control unit is configured to control the vehicle lamp to form a light distribution pattern in which a region between detected white lines is illuminated as a traveling region and an outer side of the traveling region is illuminated as a road shoulder region.

6. A vehicle lamp system comprising:
a vehicle lamp configured to illuminate a front of a vehicle; and
a control unit configured to control driving of the vehicle lamp according to information on a light distribution pattern to be formed by the vehicle lamp,
wherein the control unit is configured to control the vehicle lamp to form a light distribution pattern in which a road shoulder region on an outer side of white lines detected based on image information obtained by capturing an image of the front of the vehicle is brighter than a traveling region between the white lines.

7. The vehicle lamp system according to claim 6,
wherein brightness of a boundary between the road shoulder region and the traveling region in the light distribution pattern changes in multiple stages.

8. The vehicle lamp system according to any one of claims 1 to 7,
wherein the vehicle lamp includes a light source in which a plurality of light emitting regions are arranged in a matrix shape, and
wherein the control unit is configured to form a plurality of light distribution patterns by changing an illumination state of a part of light emitting regions among the plurality of light emitting regions.

9. A control device for controlling a vehicle lamp capable of illuminating a front of a vehicle, the control device comprising:
a control unit configured to control the vehicle lamp according to information on a light distribution pattern to be formed by the vehicle lamp,
wherein the control unit is configured to control driving of the vehicle lamp to to perform illumination to reach a distant region farther than a region where a white line is detected based on image information obtained by capturing an image of the front of the vehicle.

10. A light distribution control method for controlling a vehicle lamp according to information on a light distribution pattern to be formed by the vehicle lamp, the vehicle lamp being capable of illuminating a front of a vehicle, the light distribution control method comprising:
controlling driving of the vehicle lamp to perform illumination to reach a distant region farther than a region where a white line is detected based on image information obtained by capturing an image of the front of the vehicle.

11. A non-transitory computer-readable medium storing a program causing a control unit to control a vehicle lamp according to information on a light distribution pattern to be formed by the vehicle lamp, the vehicle lamp being capable of illuminating a front of a vehicle,
wherein the program causes the control unit to perform a step of controlling driving of the vehicle lamp to perform illumination to reach a distant region farther than a region where a white line is detected based on image information obtained by capturing an image of the front of the vehicle.

12. A vehicle lamp system comprising:
a vehicle lamp configured to illuminate a front of a vehicle; and
a control unit configured to control the vehicle lamp to illuminate the front of the vehicle with a light distribution pattern determined based on weather information correlated with a weather state around the vehicle and reflection object information on a reflection object present in front of the vehicle,
wherein the control unit is configured to:
control, in a case in which it is normal weather and no reflection object is present in front of the vehicle, the vehicle lamp to perform illumination with a first light distribution pattern;
control, in a case in which it is normal weather and a reflection object is present in front of the vehicle, the vehicle lamp to perform illumination with a second light distribution pattern in which a partial region where the reflection object is present is darker than a corresponding partial region in the first light distribution pattern; and
control, in a case in which it is rainy weather and a reflection object is present in front of the vehicle, the vehicle lamp to perform illumination with a third light distribution pattern in which a partial region where the reflection object is present is darker than a corresponding partial region in the second light distribution pattern.

13. A vehicle lamp system comprising:
a vehicle lamp configured to illuminate a front of a vehicle; and
a control unit configured to control the vehicle lamp to illuminate the front of the vehicle with a light distribution pattern determined based on reflection object information on a reflection object present in front of the vehicle and presence or absence of reflection of reflected light, that is reflected by the reflection object, on a road surface,
wherein the control unit is configured to:
control, in a case in which no reflection object is present in front of the vehicle, the vehicle lamp to perform illumination with a first light distribution pattern;
control, in a case in which a reflection object is present in front of the vehicle and the reflection is not present, the vehicle lamp to perform illumination with a second light distribution pattern in which a partial region where the reflection object is present is darker than a corresponding partial region in the first light distribution pattern; and
control, in a case in which a reflection object is present in front of the vehicle and the reflection is present, the vehicle lamp to perform illumination with a third light distribution pattern in which a partial region where the reflection object is present is darker than a corresponding partial region in the second light distribution pattern.

14. The vehicle lamp system according to claim 13,
wherein the control unit is configured to control the vehicle lamp to perform illumination with the third light distribution pattern in a case in which a reflected region having a predetermined luminance or more is detected based on image information obtained by an imaging unit capturing an image of the road surface.

15. The vehicle lamp system according to claim 13,
wherein the control unit is configured to control the vehicle lamp to perform illumination with the third light distribution pattern in a case in which: a reflected region having a predetermined luminance or more is detected based on image information obtained by an imaging unit capturing an image of the road surface; and an area of the reflected region is larger than a predetermined area.

16. The vehicle lamp system according to claim 13,
wherein the control unit is configured to control the vehicle lamp to perform illumination with the third light distribution pattern in a case in which a line-of-sight of a driver in the vehicle is directed to a front side from the vehicle by a predetermined distance based on line-of-sight information of the driver.

17. The vehicle lamp system according to any one of claims 12 to 16,
wherein the vehicle lamp includes a light source in which a plurality of light emitting regions are arranged in a matrix shape, and
wherein the control unit is configured to form a plurality of light distribution patterns, in which brightness of the partial region is different, by changing an illumination state of a part of light emitting regions among the plurality of light emitting regions.

18. The vehicle lamp system according to claim 17,
wherein in the light source, 20 or more light emitting elements are arranged in a short side direction of a rectangle, and 100 or more light emitting elements are arranged in a long side direction of the rectangle.

19. A control device for controlling a vehicle lamp capable of illuminating a front of a vehicle, the control device comprising:
a control unit configured to control the vehicle lamp to illuminate the front of the vehicle with a light distribution pattern determined based on weather information correlated with a weather state around the vehicle and reflection object information on a reflection object present in front of the vehicle,
wherein the control unit is configured to:
control, in a case in which it is normal weather and no reflection object is present in front of the vehicle, the vehicle lamp to perform illumination with a first light distribution pattern;
control, in a case in which it is normal weather and a reflection object is present in front of the vehicle, the vehicle lamp to perform illumination with a second light distribution pattern in which a partial region where the reflection object is present is darker than a corresponding partial region in the first light distribution pattern; and
control, in a case in which it is rainy weather and a reflection object is present in front of the vehicle, the vehicle lamp to perform illumination with a third light distribution pattern in which a partial region where the reflection object is present is darker than a corresponding partial region in the second light distribution pattern.

20. A light distribution control method for controlling a vehicle lamp to illuminate a front of a vehicle with a light distribution pattern determined based on weather information correlated with a weather state around the vehicle and reflection object information on a reflection object present in front of the vehicle, the light distribution control method comprising:
controlling, in a case in which it is normal weather and no reflection object is present in front of the vehicle, the vehicle lamp to perform illumination with a first light distribution pattern;
controlling, in a case in which it is normal weather and a reflection object is present in front of the vehicle, the vehicle lamp to perform illumination with a second light distribution pattern in which a partial region where the reflection object is present is darker than a corresponding partial region in the first light distribution pattern; and
controlling, in a case in which it is rainy weather and a reflection object is present in front of the vehicle, the vehicle lamp to perform illumination with a third light distribution pattern in which a partial region where the reflection object is present is darker than a corresponding partial region in the second light distribution pattern.

21. A non-transitory computer-readable medium storing a program causing a control unit to control a vehicle lamp to illuminate a front of a vehicle with a light distribution pattern determined based on weather information correlated with a weather state around the vehicle and reflection object information on a reflection object present in front of the vehicle,
wherein the program causes the control unit to perform:
a step of controlling, in a case in which it is normal weather and no reflection object is present in front of the vehicle, the vehicle lamp to perform illumination with a first light distribution pattern;
a step of controlling, in a case in which it is normal weather and a reflection object is present in front of the vehicle, the vehicle lamp to perform illumination with a second light distribution pattern in which a partial region where the reflection object is present is darker than a corresponding partial region in the first light distribution pattern; and
a step of controlling, in a case in which it is rainy weather and a reflection object is present in front of the vehicle, the vehicle lamp to perform illumination with a third light distribution pattern in which a partial region where the reflection object is present is darker than a corresponding partial region in the second light distribution pattern.

22. A vehicle lamp system comprising:
a vehicle lamp including a light source in which a plurality of light emitting regions are arranged in a matrix shape, the vehicle lamp being configured to illuminate a front of a vehicle with light emitted from the light source; and
a control unit configured to control the vehicle lamp to perform illumination with a selected light distribution pattern by controlling an amount of light emitted from each of the plurality of light emitting regions,
wherein the control unit is configured control the vehicle lamp to illuminate, in rainy weather, the front of the vehicle with a determination light distribution pattern for determining a road shoulder.

23. The vehicle lamp system according to claim 22,
wherein the control unit is configured to control the vehicle lamp to perform illumination in rainy weather with a road shoulder light distribution pattern, the road shoulder light distribution pattern in which a region determined as the road shoulder based on image information obtained by capturing an image of the front of the vehicle illuminated with the determination light distribution pattern is brighter than in a normal light distribution pattern.

24. The vehicle lamp system according to claim 22 or 23,
wherein the control unit is configured to control the vehicle lamp to illuminate the front of the vehicle with the determination light distribution pattern in response to acquiring a signal for causing the vehicle lamp to perform illumination with a high beam light distribution pattern.

25. The vehicle lamp system according to claim 24,
wherein the control unit is configured to control the vehicle lamp to illuminate the front of the vehicle with the determination light distribution pattern brighter than the high beam light distribution pattern.

26. The vehicle lamp system according to claim 22,
wherein the control unit is configured to control the vehicle lamp to:
perform, at a predetermined timing during traveling in rainy weather, illumination with, as the determination light distribution pattern, a first determination light distribution pattern and a second determination light distribution pattern darker than the first determination light distribution pattern; and
perform illumination with a road shoulder light distribution pattern, in which a region determined as the road shoulder based on image information obtained by capturing an image of the front of the vehicle illuminated with the first determination light distribution pattern and image information obtained by capturing an image of the front of the vehicle illuminated with the second determination light distribution pattern is brighter than in a normal light distribution pattern.

27. The vehicle lamp system according to claim 23 or 26,
wherein the control unit is configured to control the light source to increase an amount of light illuminating the region determined as the road shoulder and emitted from a part of the light emitting regions of the light source.

28. The vehicle lamp system according to claim 23 or 26,
wherein the control unit is configured to determine, as the road shoulder, a region including a portion whose intensity of reflected light has a value greater, by a predetermined value or more, than an intensity of reflected light of a portion corresponding to a road surface in the image information obtained by capturing an image of the front of the vehicle illuminated with the determination light distribution pattern.

29. The vehicle lamp system according to claim 28,
wherein the control unit is configured to control the vehicle lamp to stop the illumination with the road shoulder light distribution pattern in a case in which a difference between the intensity of the reflected light of the portion determined as the road shoulder and the intensity of the reflected light of the portion corresponding to the road surface is equal to or less than a predetermined value.

30. A control device configured to control a vehicle lamp including a light source in which a plurality of light emitting regions are arranged in a matrix shape, the vehicle lamp being capable of illuminating a front of a vehicle with light emitted from the light source, the control device comprising:
a control unit configured to control the vehicle lamp to perform illumination with a selected light distribution pattern by controlling an amount of light emitted from each of the plurality of light emitting regions,
wherein the control unit is configured to control the vehicle lamp to illuminate, in rainy weather, the front of the vehicle with a determination light distribution pattern for determining a road shoulder.

31. A light distribution control method for controlling a vehicle lamp including a light source in which a plurality of light emitting regions are arranged in a matrix shape, the vehicle lamp being capable of illuminating a front of a vehicle with light emitted from the light source, the light distribution control method comprising:
controlling the vehicle lamp to perform illumination with a selected light distribution pattern by controlling an amount of light emitted from each of the plurality of light emitting regions,
wherein the vehicle lamp is controlled to illuminate, in rainy weather, the front of the vehicle with a determination light distribution pattern for determining a road shoulder.

32. A non-transitory computer-readable medium storing a program causing a control unit to control a vehicle lamp including a light source in which a plurality of light emitting regions are arranged in a matrix shape, the vehicle lamp being capable of illuminating a front of a vehicle with light emitted from the light source,
wherein the program causes the control unit to perform:
a step of controlling the vehicle lamp to perform illumination with a selected light distribution pattern by controlling an amount of light emitted from each of the plurality of light emitting regions; and
a step of controlling the vehicle lamp to illuminate, in rainy weather, the front of the vehicle with a determination light distribution pattern for determining a road shoulder is performed.

33. A vehicle lamp system comprising:
a vehicle lamp configured to illuminate a front of a vehicle; and
a control unit configured to control driving of the vehicle lamp according to information on a light distribution pattern to be formed by the vehicle lamp,
wherein the vehicle lamp includes:
a first lamp unit configured to form a low beam light distribution pattern; and
a second lamp unit configured to form, on a road surface, a road surface drawing light distribution pattern whose shape changes depending on presence or absence of a rut, and
wherein the control unit is configured to control the driving of the vehicle lamp to form the low beam light distribution pattern and the road surface drawing light distribution pattern in a case in which a snow accumulation situation in front of the vehicle is detected.

34. The vehicle lamp system according to claim 33,
wherein the second lamp unit includes a light source in which a plurality of light emitting regions are arranged in a matrix shape, and
wherein the control unit is configured to form a plurality of light distribution patterns by changing an illumination state of a part of light emitting regions among the plurality of light emitting regions, and control the driving of the vehicle lamp to draw the road surface drawing light distribution pattern on the road surface as one of the light distribution patterns in a case in which the snow accumulation situation in front of the vehicle is detected.

35. The vehicle lamp system according to claim 34, further comprising:
an actuator configured to change an illumination direction of the second lamp unit upwardly and downwardly,
wherein the control unit is configured to control a movement of the actuator such that the illumination direction of the second lamp unit is more downward in a case in which the snow accumulation situation in front of the vehicle is detected than in a case in which no snow accumulation situation is detected.

36. The vehicle lamp system according to claim 35,
wherein the vehicle lamp includes a third lamp unit configured to form a high beam light distribution pattern, and
wherein the control unit is configured to control driving of the third lamp unit to stop a formation of the high beam light distribution pattern in a case in which the snow accumulation situation in front of the vehicle is detected.

37. The vehicle lamp system according to claim 33 or 34,
wherein the control unit is configured to control driving of the second lamp unit to draw a pattern on the road surface as the road surface drawing light distribution pattern, the pattern in which a light portion and a dark portion crossing the road surface in front of the vehicle are periodic.

38. The vehicle lamp system according to claim 33 or 34,
wherein the control unit is configured to determine the snow accumulation situation from information that is based on a captured image of the front of the vehicle.

39. The vehicle lamp system according to claim 38,
wherein the control unit is configured to determine the snow accumulation situation from information that is based on a temperature of an outside of the vehicle.

40. A vehicle lamp system comprising:
a vehicle lamp configured to illuminate a front of a vehicle; and
a control unit configured to control driving of the vehicle lamp according to information on a light distribution pattern to be formed by the vehicle lamp,
wherein the vehicle lamp includes:
a lamp unit configured to form, on a road surface, a road surface drawing light distribution pattern whose shape changes depending on presence or absence of a rut, and
wherein the control unit is configured to control, in a case in which a snow accumulation situation in front of the vehicle is detected, the driving of the vehicle lamp to form the road surface drawing light distribution pattern and perform follow-up illumination with the road surface drawing light distribution pattern in a region including the rut.

41. A control device configured to control a vehicle lamp capable of illuminating a front of a vehicle, the vehicle lamp including a first lamp unit configured to form a low beam light distribution pattern, and a second lamp unit configured to form, on a road surface, a road surface drawing light distribution pattern whose shape changes depending on presence or absence of a rut, the control device comprising:
a control unit configured to control the vehicle lamp according to information on a light distribution pattern to be formed by the vehicle lamp,
wherein the control unit is configured to control, in a case in which a snow accumulation situation in front of the vehicle is detected, driving of the vehicle lamp to form the low beam light distribution pattern and the road surface drawing light distribution pattern.

42. A light distribution control method for controlling a vehicle lamp according to information on a light distribution pattern to be formed by the vehicle lamp, the vehicle lamp being capable of illuminating a front of a vehicle, the vehicle lamp including a first lamp unit configured to form a low beam light distribution pattern, and a second lamp unit configured to form, on a road surface, a road surface drawing light distribution pattern whose shape changes depending on presence or absence of a rut, the light distribution control method comprising:
controlling, in a case in which a snow accumulation situation in front of the vehicle is detected, driving of the vehicle lamp to form the low beam light distribution pattern and the road surface drawing light distribution pattern.

43. A non-transitory computer-readable medium storing a program causing a control unit to control a vehicle lamp according to information on a light distribution pattern to be formed by the vehicle lamp, the vehicle lamp being capable of illuminating a front of a vehicle and including a first lamp unit configured to form a low beam light distribution pattern, and a second lamp unit configured to form, on a road surface, a road surface drawing light distribution pattern whose shape changes depending on presence or absence of a rut,
wherein the program causes the control unit to perform, in a case in which a snow accumulation situation in front of the vehicle is detected, a step of controlling driving of the vehicle lamp to form the low beam light distribution pattern and the road surface drawing light distribution pattern.
